(19) Europäisches Patentamt / European Patent Office / Office européen des brevets

(11) **EP 4 586 007 A1**

(12) **EUROPEAN PATENT APPLICATION**
published in accordance with Art. 153(4) EPC

(43) Date of publication:
**16.07.2025 Bulletin 2025/29**

(21) Application number: 23863425.7

(22) Date of filing: **04.09.2023**

(51) International Patent Classification (IPC):
*G03B 17/12* (2021.01)   *G03B 5/04* (2021.01)
*H04N 23/55* (2023.01)   *H04N 17/00* (2006.01)
*G03B 43/00* (2021.01)   *G03B 5/00* (2021.01)

(52) Cooperative Patent Classification (CPC):
G03B 5/00; G03B 5/04; G03B 17/12; G03B 43/00;
H04N 17/00; H04N 23/55

(86) International application number:
**PCT/KR2023/013123**

(87) International publication number:
**WO 2024/053950 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 05.09.2022  KR 20220112033
05.09.2022  KR 20220112034
23.08.2023  KR 20230110536
23.08.2023  KR 20230110625

(71) Applicant: **LG INNOTEK CO. LTD**
**Gangseo-gu**
**Seoul 07796 (KR)**

(72) Inventor: **LEE, Chung Hui**
**Seoul 07796 (KR)**

(74) Representative: **Plasseraud IP**
**104 Rue de Richelieu**
**CS92104**
**75080 Paris Cedex 02 (FR)**

(54) **CAMERA ACTUATOR AND CAMERA MODULE COMPRISING SAME**

(57)    An embodiment of the present invention provides a camera actuator comprising: a housing; a first lens assembly which is moved in an optical-axis direction with respect to the housing; a ball part which is disposed in the first lens assembly; and a drive part which moves the first lens assembly, wherein: the first lens assembly comprises an accommodation part having a lens hole in which a plurality of lenses are accommodated and a guiding part which comes into contact with the accommodation part and in which the ball part is disposed; and the axis of the lens hole is arranged offset from the outer surface of the guiding part, adjacent to the ball part.

FIG. 15

EP 4 586 007 A1

## Description

[Technical Field]

The present invention relates to a camera actuator and a camera module including the same.

[Background Art]

A camera is a device that takes a picture or video of a subject and is mounted on a portable device, a drone, a vehicle, or the like. A camera module may have an image stabilization (IS) function that corrects or prevents image shaking caused by a user's movements to improve image quality, an auto-focusing (AF) function that automatically adjusts a gap between an image sensor and a lens to align a focal length of a lens, and a zooming function that increases or decreases a magnification of a distant subject through a zoom lens.

However, in order to accurately perform the zooming function, auto-focus (AF), or the like within the camera module, straightness of a moving lens assembly or corresponding correction is required.

[Disclosure]

[Technical Problem]

The technical problem to be solved by an embodiment of the present invention is to provide a camera actuator and a camera device with improved optical straightness according to bending of a lens assembly.

Further, an embodiment of the present invention may provide a camera actuator and camera device with improved reliability due to shock absorption of a lens assembly.

The technical problem that the present invention seeks to solve is to provide a camera actuator applicable to an ultra-slim, ultra-small, and high-resolution camera.

The problem to be solved in the embodiment is not limited thereto, and it may be said that the purpose or effect that may be understood from the solution of the problem or the embodiment described below is also included.

[Technical Solution]

A camera actuator according to an embodiment of the present invention includes a housing, a first lens assembly configured to move in an optical-axis direction with respect to the housing, a ball part located in the first lens assembly, and a driving part configured to move the first lens assembly, wherein the first lens assembly includes an accommodation part having a lens hole in which a plurality of lenses are accommodated, and a guiding part configured to come into contact with the accommodation part and in which the ball part is disposed, and an axis of the lens hole is disposed to be misaligned with an outer surface of the guiding part adjacent to the ball part.

An upper surface of the accommodation part may be non-perpendicular to the outer surface of the guiding part adjacent to the ball part.

An upper surface of the accommodation part and the outer surface of the guiding part adjacent to the ball part may form a first angle.

The camera actuator may include a lens group disposed in the lens hole of the first lens assembly.

The upper surface of the accommodation part and a plane perpendicular to an axis of the lens group may form a second angle.

The first angle and the second angle may have the same size.

The axis of the lens group may be parallel to the optical-axis direction.

The upper surface of the accommodation part may include a first end portion located on one side and a second end portion located on the other side in a direction perpendicular to the optical-axis direction, and the upper surface of the lens group may include a third end portion located on one side and a fourth end portion located on the other side in the direction perpendicular to the optical-axis direction.

A separation distance between the first end portion and the second end portion in the optical-axis direction may be greater than a separation distance between the third end portion and the fourth end portion in the optical-axis direction.

The first end portion may be located at a front end of the second end portion, and the third end portion may overlap the fourth end portion in the direction perpendicular to the optical-axis direction.

The camera actuator may include a first adjustment member disposed on a bottom surface of the accommodation part.

The first adjustment member may be disposed on a bisector of the first lens assembly in a first direction that is perpendicular to the optical-axis direction.

The first lens assembly may include a second adjustment member disposed to be spaced apart from the first adjustment member.

The first adjustment member and the second adjustment member may have different lengths in the optical-axis direction.

The first lens assembly may include a lens protrusion part which comes into contact with the accommodation part and corresponds to the guiding part, the guiding part may be located on one side surface of the accommodation part, and the lens protrusion part may be located on the other side surface of the accommodation part.

A camera actuator according to an embodiment of the present invention includes a housing, a first lens assembly configured to move in an optical-axis direction with respect to the housing, a ball part located in the first lens assembly, and a driving part configured to move the first lens assembly, wherein the first lens assembly includes an accommodation part having a lens hole in which a plurality of lenses are accommodated and a first adjustment member disposed on a bottom surface of the accommodation part.

The first adjustment member may be disposed on a bisector of the first lens assembly in a first direction that is perpendicular to the optical-axis direction.

The first lens assembly may include a second adjustment member disposed to be spaced apart from the first adjustment member.

The second adjustment member may be misaligned with the bisector of the first lens assembly in the first direction.

The first adjustment member and the second adjustment member may have different lengths in the optical-axis direction.

The first adjustment member may extend in the optical-axis direction.

The first lens assembly may include a guiding part which comes into contact with the accommodation part and in which the ball part is located.

The first lens assembly may include a lens protrusion part which comes into contact with the accommodation part and corresponds to the guiding part.

The guiding part may be located on one side surface of the accommodation part, and the lens protrusion part may be located on the other side surface of the accommodation part.

The first lens assembly may include a first accommodation lens and a second accommodation lens sequentially disposed in the optical-axis direction.

The first accommodation lens may include a first lens outer surface adjacent to the lens protrusion part and a second lens outer surface adjacent to the guiding part, and the first lens outer surface and the second lens outer surface may be misaligned in the first direction and a second direction perpendicular to the optical-axis direction.

The second accommodation lens may include a third lens outer surface adjacent to the lens protrusion part and a fourth lens outer surface adjacent to the guiding part, and the third lens outer surface and the fourth lens outer surface may be misaligned in the first direction and the second direction perpendicular to the optical axis direction.

An upper surface of the guiding part may be disposed at a front end of an upper surface of the lens protrusion part.

The camera actuator may include a first stopper disposed at one end of the housing and a second stopper disposed at the other end thereof, the first stopper may include a 1-1 stopper disposed at one side and a 1-2 stopper disposed at the other side, and the second stopper may include a 2-1 stopper disposed at one side and a 2-2 stopper disposed at the other side.

A distance between the 1-1 stopper and the guiding part of the first lens assembly may be smaller than a distance between the 1-2 stopper and the lens protrusion part of the first lens assembly.

[Advantageous Effects]

According to an embodiment of the present invention, a camera actuator and a camera device with improved optical straightness according to the bending of a lens assembly can be implemented.

In addition, an embodiment of the present invention can implement a camera actuator and a camera device with improved reliability due to shock absorption of the lens assembly.

The technical problem to be solved by the present invention is to implement a camera actuator applicable to ultra-slim, ultra-small, and high-resolution cameras.

The various advantageous and beneficial advantages and effects of the present invention are not limited to the above-described content and will be more easily understood in the course of explaining specific embodiments of the present invention.

[Description of Drawings]

FIG. 1 is a perspective view of a camera module according to an embodiment.

FIG. 2 is an exploded perspective view of the camera module according to the embodiment.

FIG. 3 is a diagram viewed from line A-A' in FIG. 1.

FIG. 4 is a perspective view of a second camera actuator according to the embodiment.

FIG. 5 is an exploded perspective view of the second camera actuator according to the embodiment.

FIG. 6 is a cross-sectional view taken along line D-D' in FIG. 4.

FIGS. 7 and 8 are diagrams for describing each driving of a lens assembly according to the embodiment.

FIG. 9 is a diagram for describing driving of the second camera actuator according to the embodiment.

FIG. 10 is a perspective view of a part of a configuration of the second camera actuator according to the embodiment.

FIG. 11 is a perspective view of a first lens assembly (or a second lens assembly) according to the embodiment.

FIG. 12 is a front view of the first lens assembly (or the second lens assembly) according to the embodiment.

FIG. 13 is a side view of the first lens assembly (or the second lens assembly) according to the embodiment.

FIG. 14 is a rear view of the first lens assembly (or the second lens assembly) according to the embodiment.

FIG. 15 is another side view of the first lens assembly (or the second lens assembly) according to the embodiment.

FIG. 16A is a perspective view of a measurement device according to the embodiment.

FIG. 16B is a side view of the measurement device according to the embodiment.

FIG. 16C is another side view of the measurement device according to the embodiment.

FIG. 17A is a perspective view of a measurement ball, a measurement device, and a first lens assembly according to the embodiment.

FIG. 17B is a side view of FIG. 17A.

FIG. 17C is a partial cutaway view of FIG. 17B.

FIG. 17D is a diagram for describing a measurement method using the measurement device according to the embodiment.

FIG. 17E is a diagram illustrating various shapes of a lens assembly according to the embodiment.

FIGS. 17F to 17H are diagrams for describing an inclination angle in the measurement method using the measurement device according to the embodiment.

FIG. 17I is a cutaway view and an enlarged view of the second camera actuator according to the embodiment.

FIG. 18 is still another side view of the first lens assembly (or the second lens assembly) according to the embodiment.

FIG. 19 is a perspective view taken along line C-C' in FIG. 18.

FIG. 20 is a diagram taken along line C-C' in FIG. 18.

FIG. 21 is a diagram in which a lens group is accommodated in FIG. 18.

FIG. 22 is a diagram of the first lens assembly and the second lens assembly according to the embodiment.

FIG. 23 is a diagram taken along line E-E' in FIG. 22.

FIG. 24 is a cross-sectional view of the second camera actuator according to the embodiment.

FIG. 25 is an enlarged view of portion P in FIG. 22.

FIG. 26 is a schematic diagram illustrating a circuit board according to the embodiment.

FIG. 27 is a perspective view of a mobile terminal to which the camera module according to the embodiment is applied.

FIG. 28 is a perspective view of a vehicle to which the camera module according to the embodiment is applied.

[Modes of the Invention]

The present invention may have various modifications and embodiments, and specific embodiments are exemplified and described in the drawings. However, this is not intended to limit the present invention to the specific embodiments, but should be understood to include all modifications, equivalents, or substitutes included in the spirit and technical scope of the present invention.

Terms that include ordinal numbers, such as second, first, or the like, may be used to describe various components, but the components are not limited by the terms. The terms are used solely to distinguish one component from another. For example, without departing from the scope of the present invention, a second component could be named a first component, and similarly, the first component could also be named the second component. The term and/or includes any combination of multiple related/described items or any one of multiple/related described items.

When a component is said to be "connected" or "linked" to another component, it should be understood that it may be directly connected or linked to the other components, but that there may also be other components in between. On the other hand, when it is said that a component is "directly connected" or "directly linked" to another component, it should be understood that there are no other components in between.

The terminology used in this application is only used to describe specific embodiments and is not intended to limit the present invention. The singular expression includes the plural expression unless the context clearly indicates otherwise. In this application, it should be understood that terms such as "include" or "have" are intended to specify the presence of a feature, number, step, operation, component, part, or combination thereof described in the specification, but do not exclude in advance the possibility of the presence or addition of one or more other features, numbers, steps, operations, components, parts, or combinations thereof.

Unless otherwise defined, all terms used herein, including technical or scientific terms, have the same meaning as commonly understood by a person of ordinary skill in the art to which this invention belongs. Terms defined in commonly used dictionaries should be interpreted as having a meaning consistent with their meaning in the context of the relevant art, and will not be interpreted in an idealized or overly formal sense, unless expressly defined otherwise in this application.

Hereinafter, embodiments will be described in detail with reference to the attached drawings. Regardless of the drawing numbers, identical or corresponding components are given the same reference numerals, and redundant descriptions thereof will be omitted.

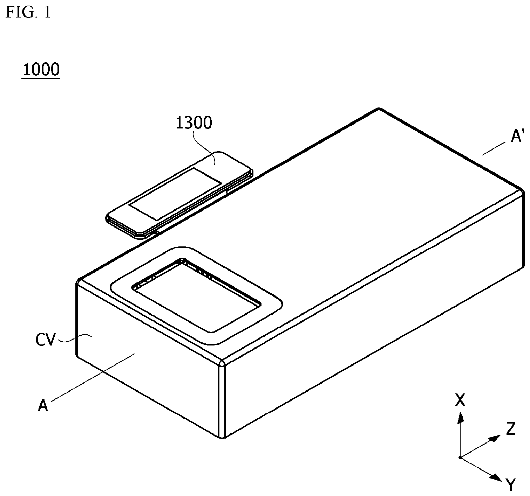

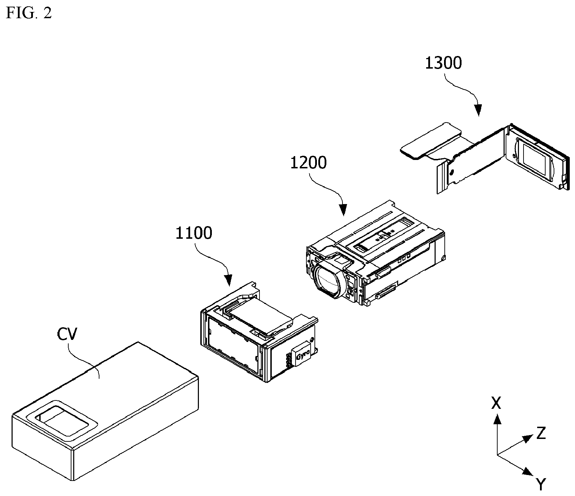

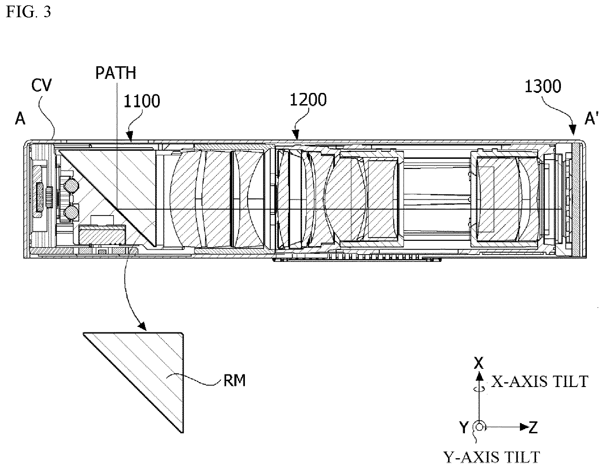

FIG. 1 is a perspective view of a camera module according to an embodiment, FIG. 2 is an exploded perspective view of the camera module according to the embodiment, and FIG. 3 is a diagram taken along line A-A' of FIG. 1.

Referring to FIGS. 1 and 2, a camera module 1000 according to the embodiment may be configured of a cover CV, a first camera actuator 1100, a second camera actuator 1200, and a circuit board 1300. Here, the first camera actuator 1100 may be used interchangeably as a first actuator, and the second camera actuator 1200 may be used interchangeably as a second actuator.

The cover CV may cover the first camera actuator 1100 and the second camera actuator 1200. A coupling force between the first camera actuator 1100 and the second camera actuator 1200 may be improved by the cover CV.

Furthermore, the cover CV may be made of a material that performs electromagnetic wave blocking. Therefore, the first camera actuator 1100 and the second camera actuator 1200 within the cover CV may be easily protected.

Additionally, the first camera actuator 1100 may be an optical image stabilizer (OIS) actuator. For example, the first camera actuator 1100 may move an optical member in a direction perpendicular to an optical axis (an axis of incident light).

The first camera actuator 1100 may include a fixed focal length lens disposed in a predetermined barrel (not shown). The fixed focal length lens may also be referred to as a "single focal length lens" or a "single lens."

The first camera actuator 1100 may change a path of light. In the embodiment, the first camera actuator 1100 may change the path of light vertically through an internal optical member (for example, a prism or mirror). For example, the optical member may change light from a first direction (an X-axis direction) to a third direction (a Z-axis direction). Alternatively, the optical member may change light from a first axis to a second axis. With such a configuration, even when a thickness of a mobile terminal is reduced, a lens configuration larger than the thickness of the mobile terminal may be disposed inside the mobile terminal through a change in the light path, and thus magnification, auto-focusing (AF), zoom, and OIS functions may be performed.

However, it is not limited thereto, and the first camera actuator 1100 may change the light path vertically or at a predetermined angle multiple times.

The second camera actuator 1200 may be disposed at a rear end of the first camera actuator 1100. The second camera actuator 1200 may be coupled to the first camera actuator 1100. Additionally, the coupling between the second camera actuator 1200 and the first camera actuator 1100 may be achieved in various ways.

Further, the second camera actuator 1200 may be a zoom actuator or an auto-focus (AF) actuator. For example, the second camera actuator 1200 supports one or more lenses and may move the lenses according to a control signal from a predetermined control part to perform an auto-focusing function or a zoom function.

Additionally, one or more lenses may move independently or individually in an optical-axis direction.

The circuit board 1300 may be disposed at a rear end of the second camera actuator 1200. The circuit board 1300 may be electrically connected to the second camera actuator 1200 and the first camera actuator 1100. In addition, there may be a plurality of circuit boards 1300.

The camera module according to the embodiment may be configured of a single module or a plurality of camera modules. For example, the plurality of camera modules may include a first camera module and a second camera module.

Additionally, the first camera module may include a single actuator or a plurality of actuators. For example, the first camera module may include a first camera actuator 1100 and a second camera actuator 1200.

The second camera module may be disposed in a predetermined housing (not shown) and may include an actuator (not shown) capable of driving a lens part. The actuator may be a voice coil motor, a micro actuator, a silicon actuator, etc. and may be applied in various ways such as an electrostatic type, a thermal type, a bimorph type, and an electrostatic force type, but is not limited thereto. In addition, in this specification, the camera actuator may be referred to as an actuator or the like. Further, a camera module configured of a plurality of camera modules may be mounted in various electronic devices such as a mobile terminal. Furthermore, the actuator may be a device that moves or tilts a lens or optical member. However, the following description will be made with the concept that the actuator includes a lens or optical member. Additionally, the actuator may be referred to as a "lens transport device," "lens moving device," "optical member transport device," "optical member moving device," or the like.

Referring to FIG. 3, the camera module according to the embodiment may include a first camera actuator 1100 having an OIS function and a second camera actuator 1200 having a zooming function and an auto-focusing (AF) function.

Light may be incident into the camera module or the first camera actuator through an aperture region located on an upper surface of the first camera actuator 1100. That is, light is first incident on the inside of the first camera actuator 1100 in a vertical direction (for example, an X-axis direction, based on incident light), and a light path may be changed to an optical-axis direction (for example, a Z-axis direction) through an optical member. Then, the light may pass through the second camera actuator 1200 and may be incident on an image sensor (IS) located at one end of the second camera actuator 1200 (PATH). In this specification, the Z-axis direction or the third direction is described as the optical-axis direction as follows. The optical-axis direction may correspond to a direction from the first camera actuator to the second camera actuator (or the image sensor) or from the second camera actuator to the image sensor. Alternatively, it may correspond to a direction in which the moving assembly moves from the second camera actuator. In addition, the first direction or the X-axis direction is described as a vertical direction. Additionally, the second direction or the Y-axis direction is described as a horizontal direction.

In this specification, a bottom surface means one side in the first direction. The first direction is the X-axis direction in the drawings and may be used interchangeably with a second-axis direction or the like. The second direction is the Y-axis direction in the drawings and may be used interchangeably with a first-axis direction or the like. The second direction is a direction perpendicular to the first direction. Additionally, the third direction is the Z-axis direction in the drawings and may be used interchangeably with a third-axis direction or the like. The third direction is a direction perpendicular to both the first direction and the second direction. Here, the third direction (the Z-axis direction) corresponds to the optical-axis direction, and the first direction (the X-axis direction) and the second direction (the Y-axis direction) are directions perpendicular to the optical axis. Further, in the following description of the first and second camera actuators, the optical-axis direction is the third direction (the Z-axis direction), and the following description is given based on this.

Moreover, in the present specification, the inner side may be a direction towards the first camera actuator in the cover CV, and the outer side may be a direction opposite to the inner side. That is, the first camera actuator and the second camera actuator may be located inside the cover CV, and the cover CV may be located outside the first camera actuator or the second camera actuator.

With such a configuration, in the camera module according to the embodiment, spatial limitations of the first camera actuator and the second camera actuator may be improved by changing the path of light. That is, in the camera module according to the embodiment, the light path may expand while a thickness of the camera module is minimized, thereby corresponding to a change in the path of the light. Furthermore, it should be understood that the second camera actuator may also provide a high range of magnification by controlling a focus or the like in the expanded light path.

In addition, in the camera module according to the embodiment, the OIS may be implemented by controlling the light path through the first camera actuator, and thus it is possible to minimize the occurrence of a descent or tilt phenomenon and to achieve the best optical characteristics.

Moreover, the second camera actuator 1200 may include an optical system and a lens driving part. For example, at least one of a first lens assembly, a second lens assembly, and a third lens assembly may be disposed in the second camera actuator 1200.

Further, the second camera actuator 1200 is equipped with a coil and a magnet to perform a high-magnification zooming function and an auto-focusing function.

For example, the first lens assembly and the second lens assembly may be moving lenses that move through coils, magnets, and guide pins, and the third lens assembly may be a fixed lens, but is not limited thereto.

Meanwhile, when an actuator for OIS and an actuator for AF/Zoom are disposed according to an embodiment of the present invention, magnetic interference with the magnet for AF/Zoom may be prevented when the OIS is driven. Since a first driving magnet of the first camera actuator 1100 is disposed separately from the second camera actuator 1200, magnetic interference between the first camera actuator 1100 and the second camera actuator 1200 may be prevented. In this specification, the OIS may be used interchangeably with the terms such as image stabilization, optical image stabilization, optical image correction, shake correction, or the like.

In particular, an optical member RM in the first camera actuator 1100 may be tilted with respect to the X-axis or the Y-axis. Thus, the light path may be easily changed according to the X-axis tilt or the Y-axis tilt.

The optical member RM may be mounted on a holder of the first camera actuator or the like. In the embodiment, the optical member RM may be configured of a mirror or a prism. In the following, the prism is illustrated as a standard, but it may be configured of a plurality of lenses as in the above-described embodiment. Alternatively, the optical member RM may be configured of a plurality of lenses and prisms or mirrors. The optical member RM may include a reflection part disposed therein. However, the present invention is not limited thereto.

By driving a VCM or the like in the first camera actuator 1100, the optical member RM may be tilted with respect to the X-axis or Y-axis. That is, the OIS may be implemented while tilting or rotating the optical member RM with respect to the Y-axis or X-axis direction.

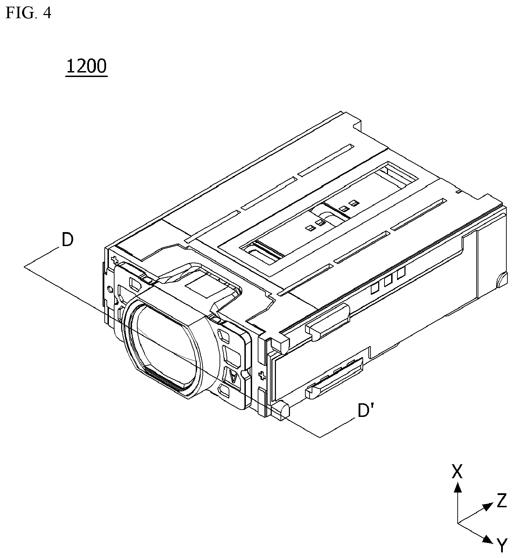

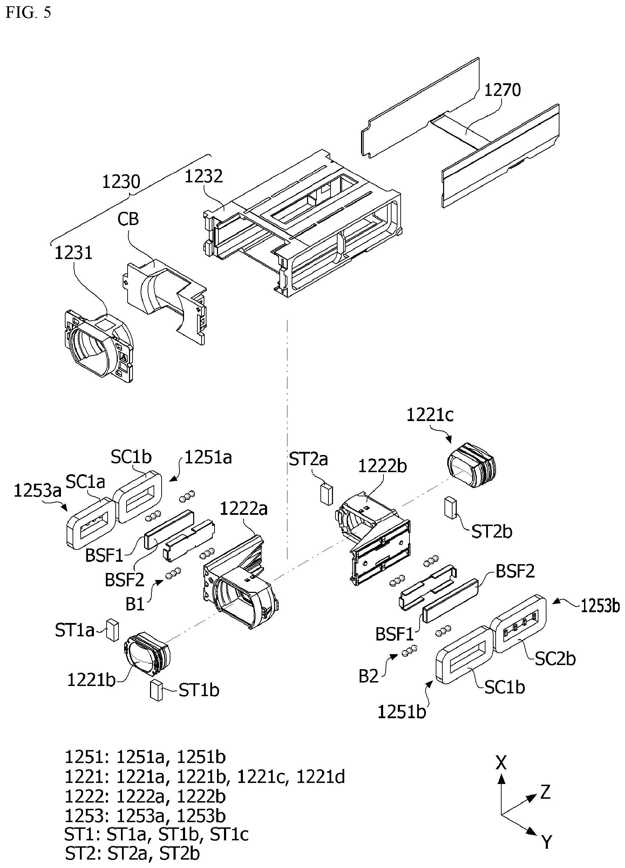

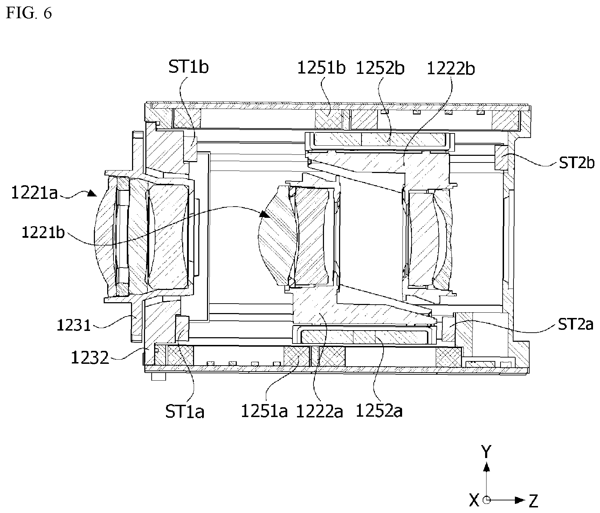

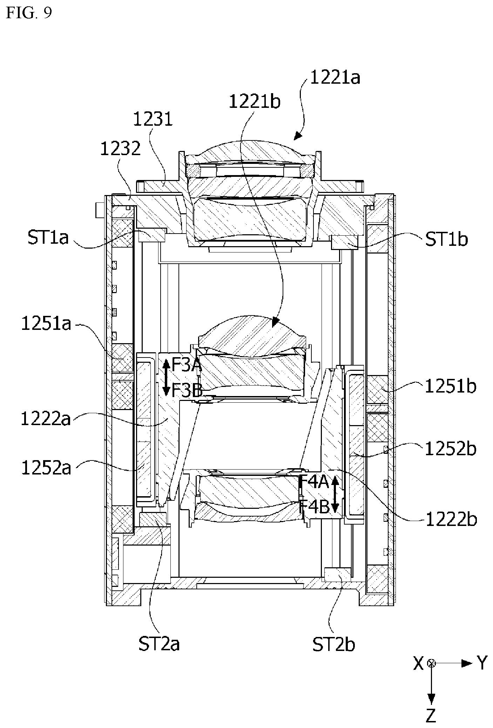

FIG. 4 is a perspective view of the second camera actuator according to the embodiment, FIG. 5 is an exploded perspective view of the second camera actuator according to the embodiment, FIG. 6 is a cross-sectional view taken along line D-D' in FIG. 4, FIGS. 7 and 8 are diagrams for describing each driving of the lens assembly according to the embodiment, and FIG. 9 is a diagram for describing driving of the second camera actuator according to the embodiment.

Referring to FIGS. 4 to 6, the second camera actuator 1200 (or a camera device, a zoom lens transport device, a zoom lens moving device, or a lens transport device) according to the embodiment may include a lens part 1220, a housing 1230, a yoke part 1240, a driving part 1250, a base part 1260, a substrate part 1270, and stoppers ST1 and ST2. Furthermore, the second camera actuator 1200 may further include a shield can (not shown), an elastic part (not shown), and a bonding member (not shown).

In addition, as described below, a lens group may move in the optical-axis direction. The lens group may be combined with the lens assembly and may move together in the optical-axis direction. At this time, the second camera actuator may include a moving part that moves in the optical-axis direction together with the lens group, and a fixed part that is relatively fixed and does not move in the optical-axis direction unlike the moving part. In this embodiment, the moving part may include a lens assembly (for example, first and second lens assemblies) and an optical driving magnet (first and second driving magnets). The fixed part may include a housing, a substrate part, an optical driving coil (first and second coils), and a Hall sensor. Further, a driving magnet may be disposed on one of the moving part and the fixed part, and a driving coil may be disposed on the other of the moving part and the fixed part. Corresponding to this description, a moving distance of the lens assembly described below may correspond to a moving distance of the moving part.

The shield can (not shown) may be located in a region (for example, the outermost region) of the second camera actuator 1200 and may be located to surround components described below (the lens part 1220, the housing 1230, the driving part 1250, the base part 1260, the substrate part 1270, and an image sensor IS disposed on a circuit board at a rear end thereof).

The shield can (not shown) may block or reduce electromagnetic waves generated from the outside. Thus, the occurrence of a malfunction in the driving part 1250 may be reduced.

The lens part 1220 may be located within the shield can (not shown). The lens part 1220 may move in the third direction (the Z-axis direction or the optical-axis direction). Thus, the AF function or zoom function described above may be performed.

Moreover, the lens part 1220 may be located within the housing 1230. Thus, at least a part of the lens part 1220 may move in the optical-axis direction or the third direction (the Z-axis direction) within the housing 1230.

Specifically, the lens part 1220 may include a lens group 1221 and a moving assembly 1222.

First, the lens group 1221 may include at least one lens. In addition, a plurality of lens groups 1221 may be provided, but the following description will be based on one lens group.

The lens group 1221 is coupled to the moving assembly 1222 and may move in the third direction (the Z-axis direction) by an electromagnetic force generated from a first magnet 1252a and a second magnet 1252b coupled to the moving assembly 1222.

In the embodiment, the lens group 1221 may include a first lens group 1221a, a second lens group 1221b, and a third lens group 1221c. The first lens group 1221a, the second lens group 1221b, and the third lens group 1221c may be sequentially disposed in the optical-axis direction. Furthermore, the lens group 1221 may further include a fourth lens group. The fourth lens group may be disposed behind the third lens group 1221c.

The first lens group 1221a may be fixedly combined with a 2-1 housing (or a fixed assembly). In other words, the first lens group 1221a may not move in the optical-axis direction.

The second lens group 1221b may be coupled to a first lens assembly 1222a and may move in the third direction or the optical-axis direction. Magnification adjustment may be performed by the movement of the first lens assembly 1222a and the second lens group 1221b.

The third lens group 1221c may be coupled to a second lens assembly 1222b and may move in the third direction or the optical-axis direction. Focus adjustment or auto-focusing may be performed by the movement of the third lens group 1221.

However, the number of lens groups is not limited, and the fourth lens group described above may not be present, or additional lens groups other than the fourth lens group 1121d may be disposed.

The moving assembly 1222 may include an aperture region surrounding the lens group 1221. The moving assembly 1222 is used interchangeably with the first and second lens assemblies. The moving assembly 1222 or lens assembly may move in the optical-axis direction (the Z-axis direction) within the housing 1230. The moving assembly 1222 may be coupled to the lens group 1221 by various methods. Additionally, the moving assembly 1222 may have a groove in a side surface thereof and may be coupled to the first magnet 1252a and the second magnet 1252b through the groove. A coupling member or the like may be applied to the groove.

Additionally, the moving assembly 1222 may be coupled to elastic parts (not shown) at the upper and rear ends. Thus, the moving assembly 1222 may be supported by the elastic parts (not shown) while moving in the third direction (the Z-axis direction). That is, a position of the moving assembly 1222 may be maintained in the third direction (the Z-axis direction). The elastic part (not shown) may be made of various elastic elements such as a plate spring.

The moving assembly 1222 may be located within the housing 1230 and may include the first lens assembly 1222a and the second lens assembly 1222b.

A region in the second lens assembly 1222b in which the third lens group is mounted may be located at the rear end of the first lens assembly 1222a. In other words, the region in the second lens assembly 1222b in which the third lens group 1221c is mounted may be located between a region in the first lens assembly 1222a in which the second lens group 1221b is mounted and the image sensor.

The first lens assembly 1222a and the second lens assembly 1222b may face a first guide part and a second guide part, respectively. The first guide part and the second guide part may be located on a first side portion 1232a and a second side portion 1232b of a housing 1230 (or a 2-2 housing) described below. The first guide part and the second guide part may be disposed integrally or separately on the first side portion 1232a and the second side portion 1232b of the housing 1230 (or the 2-2 housing) described below. The following description is given based on the integral type.

An optical driving magnet may be mounted on an outer surface of each of the first lens assembly 1222a and the second lens assembly 1222b. For example, the second magnet 1252b may be mounted on the outer surface of the second lens assembly 1222b. The first magnet 1252a may be mounted on the outer surface of the first lens assembly 1222a. **In** this specification, the first lens assembly 1222a may be used interchangeably with a "first bobbin." The second lens assembly 1222b may be used interchangeably with a "second bobbin."

The housing 1230 may be disposed between the lens part 1220 and the shield can (not shown). The housing 1230 may be disposed to surround the lens part 1220.

The housing 1230 may include a 2-1 housing 1231, a 2-2 housing 1232, and a cover base CB. The 2-1 housing 1231 may be coupled to the first lens group 1221a and may also be coupled to the first camera actuator described above. The 2-1 housing 1231 may be located in front of the 2-2 housing 1232. The 2-1 housing may be referred to as a "fixed assembly," a "fixed lens assembly," a "fixed lens accommodation part," or the like. The 2-2 housing may be referred to as a "main barrel," a "lens barrel," a "barrel," or the like.

The 2-2 housing 1232 may be located at a rear end of the 2-1 housing 1231. The first and second lens assemblies and the lens part 1220 may be mounted inside the 2-2 housing 1232.

The housing 1230 (or the 2-2 housing 1232) may have a hole formed in a side portion thereof. A first coil 1251a and a second coil 1251b may be disposed in the hole. The hole may be located to correspond to the groove of the moving assembly 1222 described above. At this time, a plurality of first coils 1251a and second coils 1251b may be provided.

**In** the embodiment, the housing 1230 (in particular, the 2-2 housing 1232) may have the first side portion 1232a and the second side portion 1232b. The first side portion 1232a and the second side portion 1232b may be located to correspond to each other. For example, the first side portion 1232a and the second side portion 1232b may be disposed symmetrically with respect to the third direction. An optical driving coil 1251 may be located on each of the first side portion 1232a and the second side portion 1232b. Additionally, the substrate part 1270 may be mounted on outer surfaces of the first side portion 1232a and the second side portion 1232b. In other words, a first substrate may be located on the outer surface of the first side portion 1232a, and a second substrate may be located on the outer surface of the second side portion 1232b.

The cover base CB may be disposed between the 2-1 housing 1231 and the 2-2 housing 1232. The cover base CB may prevent a lens (for example, a first lens group) disposed or accommodated in the 2-1 housing 1231 (or the fixed assembly) from being damaged by shock. That is, the cover base CB may absorb the shock in the moving assembly when the moving assembly moves within the 2-2 housing 1232. Furthermore, the cover base CB may have a 1-1 stopper ST1a and a 1-2 stopper ST1b, which will be described below, located on a rear or lower surface of the cover base CB. For example, the 1-1 stopper ST1a and the 1-2 stopper ST1b may be located between the cover base CB and the moving assembly (for example, the first lens assembly). Thus, the moving assembly may primarily come into contact with the 1-1 stopper ST1a and the 1-2 stopper ST1b. Thus, the reliability of the lens group may be improved.

Furthermore, the cover base CB may be coupled to the 2-1 housing 1231 and the 2-2 housing 1232 by a bonding member (for example, epoxy). Thus, by adjusting a shape of the cover base CB, the coupling with the 2-1 housing 1231 and the 2-2 housing 1232 may be easily achieved. In addition, by adding the cover base CB, the ease of manufacturing at least one of the 2-1 housing 1231 and the 2-2 housing 1232 may be secured.

The first guide part and the second guide part may be located on the first side portion 1232a and the second side portion 1232b of the housing 1230 (in particular, the 2-2 housing 1232).

The first guide part and the second guide part may be located to correspond to each other. For example, the first guide part and the second guide part may be located to face each other with respect to the third direction (the Z-axis direction). Additionally, the first guide part and the second guide part may at least partially overlap each other in the second direction (the Y-axis direction).

The first guide part and the second guide part may have at least one groove (for example, a guide groove) or recess. A first ball B1 or a second ball B2 may be mounted in the groove or recess.

First, the second camera actuator 1200 may further include a ball part. The ball part may include a first ball B1 and a second ball B2. Due to the ball part, the first and second lens assemblies may move in the optical-axis direction. At this time, the ball part may include at least one rolling member and a ball. At least one ball may move along the guide grooves of the first and second guide parts. Additionally, at least one ball may move along the recess or groove of the first and second lens assemblies. Thus, the first ball B1 or the second ball B2 may move in the third direction (the Z-axis direction) within the guide groove of the first guide part or the guide groove of the second guide part.

Alternatively, the first ball B1 or the second ball B2 may move in the third direction along a rail formed on the inside of the first side portion 1232a of the housing 1230 or a rail formed on the inside of the second side portion 1232b of the housing 1230.

Thus, the first lens assembly 1222a and the second lens assembly 1222b may move in the third direction or the optical-axis direction. At this time, the second lens assembly 1222b may be disposed adjacent or closer to the image sensor than the first lens assembly 1222a.

According to an embodiment, the first ball B1 may come into contact with the first lens assembly 1222a. The second ball B2 may come into contact with the second lens assembly 1222b. Therefore, according to the position thereof, the first ball B1 may at least partially overlap the second ball B2 in the first direction (the X-axis direction).

Additionally, the first guide part and the second guide part may have a first guide groove facing a first recess RS1. In addition, the first guide part and the second guide part may have a second guide groove facing a second recess RS2.

Moreover, a plurality of first guide grooves or second guide grooves may be provided. Additionally, a plurality of balls having at least some different diameters may be located within the plurality of guide grooves.

The second magnet 1252b may be located to face the second coil 1251b. Additionally, the first magnet 1252a may be located to face the first coil 1251a.

For example, at least one of the first coil 1251a and the second coil 1251b may be configured of at least one coil. For example, the first coil 1251a may be configured of a plurality of coils. The second coil 1251b may be configured of a plurality of coils. Furthermore, even when the first coil and the second coil are one coil, a long stroke described below may be implemented.

In the embodiment, the optical driving coil 1251 may be configured of sub-coils sequentially disposed in the optical-axis direction (the Z-axis direction). For example, a plurality of sub-coils may be sequentially disposed in the optical-axis direction on both sides of the main barrel 1232. The 2-2 housing may be used interchangeably with the "main barrel."

In this embodiment, the optical driving part (or the driving part 1250) may include a first driving part and a second driving part. The first driving part may provide a driving force to move the first lens assembly 1222a in the optical-axis direction. The first driving part may include the first coil 1251a and the first magnet 1252a. In addition, the first driving part may include a first driving coil and a first driving magnet. Thus, the first coil 1251a may be referred to as the "first driving coil." The first magnet 1252a may be called the "first driving magnet."

The second driving part may provide a driving force to move the second lens assembly 1222b in the optical-axis direction. The second driving part may include the second coil 1251b and the second magnet 1252b.

In addition, the second driving part may include a second driving coil and a second driving magnet. Thus, the second coil 1251b may be referred to as the "second driving coil." The second magnet 1252b may be referred to as the "second driving magnet."

The elastic part (not shown) may include a first elastic member (not shown) and a second elastic member (not shown). The first elastic member (not shown) may be coupled to an upper surface of the moving assembly 1222. The second elastic member (not shown) may be coupled to a lower surface of the moving assembly 1222. Additionally, the first elastic member (not shown) and the second elastic member (not shown) may be formed as a plate spring as described above. Further, the first elastic member (not shown) and the second elastic member (not shown) may provide elasticity for movement of the moving assembly 1222. However, it is not limited to the above-described positions, and the elastic part may be disposed at various positions.

The driving part 1250 may provide a driving force to move the lens part 1220 in the third direction (the Z-axis direction). The driving part 1250 may include the optical driving coil 1251 and an optical driving magnet 1252. The optical driving coil 1251 and the optical driving magnet 1252 may be located to face each other. For example, the first driving coil 1251a and the first driving magnet 1252a may be located to face each other. In addition, the second driving coil 1251b and the second driving magnet 1252b may be located to face each other. The first driving coil 1251a may be disposed on one side in the second direction within the housing, and the second driving coil 1251a may be disposed on the other side in the second direction within the housing.

Furthermore, the driving part 1250 may further include a Hall sensor part. The Hall sensor part 1253 includes at least one first Hall sensor 1253a and a second Hall sensor 1253b and may be located inside or outside the optical driving coil 1251.

The moving assembly may move in the third direction (the Z-axis direction) by an electromagnetic force formed between the optical driving coil 1251 and the optical driving magnet 1252.

The optical driving coil 1251 may include the first coil 1251a and the second coil 1251b. In addition, as described above, the first coil 1251a and the second coil 1251b may be configured of a plurality of sub-coils. The first coil 1251a and the second coil 1251b may be disposed in holes formed in the side portion of the housing 1230. The first coil 1251a and the second coil 1251b may be electrically connected to the substrate part 1270. Thus, the first coil 1251a and the second coil 1251b may receive a current or the like through the substrate part 1270.

The optical driving coil 1251 may be coupled to the substrate part 1270 via a yoke or the like.

In the embodiment, the optical driving coil 1251 is an element fixed together with the substrate part 1270. In contrast, the optical driving magnet 1252 is a moving element that moves in the optical-axis direction (the Z-axis direction) together with the first and second assemblies.

The optical driving magnet 1252 may include the first magnet 1252a and the second magnet 1252b.

In the embodiment, the first coil 1251a may include a first sub-coil SC1a and a second sub-coil SC2a. The first sub-coil SC1a and the second sub-coil SC2a may be sequentially disposed in the optical-axis direction. The first sub-coil SC1a may be located closer to the first camera actuator than the second sub-coil SC2a.

The second coil 1251b may include a third sub-coil SC1b and a fourth sub-coil SC2b. The third sub-coil SC1b and the fourth sub-coil SC2b may be sequentially disposed in the optical-axis direction. The third sub-coil SC1b may be located closer to the first camera actuator than the fourth sub-coil SC2b.

The first magnet 1252a may face the first sub-coil SC1a and the second sub-coil SC2a. The second magnet 1252b may face the third sub-coil SC1b and the fourth sub-coil SC2b. The first sub-coil SC1a may be located to overlap the third sub-coil SC1b in the second direction. The second sub-coil SC2a may be located to overlap the fourth sub-coil SC2b in the second direction. In this way, the first magnet 1252a and the second magnet 1252b may be disposed to face two sub-coils in the same manner.

Furthermore, the coils of the first and second driving parts in the second camera actuator may be described as including the first sub-coils SC1a and SC1b and the second sub-coils SC2a and SC2b. However, in the specification, the third sub-coil and the fourth sub-coil are used interchangeably as the sub-coil that drives the second lens assembly.

The first sub-coil SC1a and the second sub-coil SC2a may be spaced apart from each other in the optical-axis direction. The first sub-coil SC1a and the second sub-coil SC2a may be connected in parallel to each other. For example, one of one end and the other end of the first sub-coil SC1a may be connected to one of one end and the other end of the second sub-coil SC2a using one node. The other of one end and the other end of the first sub-coil SC1a may be connected to the other of one end and the other end of the second sub-coil SC2a using another node. That is, a current applied to the first sub-coil SC1a and the second sub-coil SC2a may be distributed to each of the sub-coils. Thus, the first sub-coil SC1a and the second sub-coil SC2a are electrically connected in parallel, and thus heat generation may be reduced.

Moreover, a polarity of one surface of the first driving magnet 1252a facing the first driving coils SC1a and SC2a may be the same as a polarity of one surface of the second driving magnet 1252b facing the second driving coils SC1b and SC2b. For example, an inner surface of the first driving magnet 1252a and an inner surface of the second driving magnet 1252b may have either an N pole or an S pole (for example, an N pole). An outer surface of the first driving magnet 1252a and an outer surface of the second driving magnet 1252b may have the other of the N pole and the S pole (for example, an S pole). Here, the inner surface may be a side surface adjacent to the optical axis with respect to the optical axis, and the outer surface may be a side surface away from the optical axis. Additionally, the first magnet 1252a may have a first pole on a first surface BSF1 that faces the optical driving coil (for example, the first coil). The first magnet 1252a may have a second pole on a second surface BSF2 opposite to the first surface BSF1. The second magnet 1252b may have a first pole on a first surface BSF1 that faces the optical driving coil (for example, the second coil). The second magnet 1252b may have a second pole on a second surface BSF2 opposite to the first surface BSF1. The first pole may be one of the N pole and the S pole. The second pole may be the other of the N pole and the S pole.

Alternatively, the first driving magnet and the second driving magnet may have a structure in which the N pole/the S pole or the S pole/the N pole are sequentially disposed in the optical-axis direction.

Additionally, the third sub-coil SC1b and the fourth sub-coil SC2b may be spaced apart from each other in the optical-axis direction. The third sub-coil SC1b and the fourth sub-coil SC2b may be connected in parallel with each other. For example, one of one end and the other end of the third sub-coil SC1b may be connected to one of one end and the other end of the fourth sub-coil SC2b using one node.

The first magnet 1252a and the second magnet 1252b may be disposed in the above-described grooves of the moving assembly 1222 and may be located to correspond to the first coil 1251a and the second coil 1251b. The optical driving magnet 1252 may be coupled to the first and second lens assemblies (or the moving assemblies) together with a yoke described below.

The yoke part 1240 may be disposed on the substrate part 1270. The yoke part 1240 may form an attractive force with an adjacent magnet to maintain a posture of the first and second lens assemblies. That is, the yoke part 1240 may provide a holding force with respect to the moving assembly. The yoke part 1240 may include a first yoke part 1241 and a second yoke part 1242. The first yoke part 1241 may be disposed on a first substrate 1271. The second yoke part 1242 may be disposed on a second substrate 1272.

The base part 1260 may be located between the lens part 1220 and the image sensor within the circuit board. Components such as filters may be fixed to the base part 1260. In addition, the base part 1260 may be disposed to surround the image sensor described above. With such a configuration, since the image sensor is free from foreign substances or the like, the reliability of elements may be improved. However, in some drawings below, this is removed and an explanation thereof is given.

Additionally, the second camera actuator 1200 may be a zoom actuator or an auto-focus (AF) actuator. For example, the second camera actuator may support one or more lenses and may move the lenses according to a control signal from a predetermined control part to perform an auto-focusing function or a zoom function.

The second camera actuator may perform a fixed zoom or continuous zoom. For example, the second camera actuator may move the lens group 1221.

Additionally, the second camera actuator may be configured of a plurality of lens assemblies. For example, in the second camera actuator, at least one of a third lens assembly (not shown) and a guide pin (not shown) may be disposed in addition to the first lens assembly 1222a and the second lens assembly 1222b. The above-described content may be applied to this matter. Thus, the second camera actuator may perform a high-magnification zooming function through the driving part.

The image sensor may be located inside or outside the second camera actuator. In the embodiment, the image sensor may be located outside the second camera actuator as illustrated. For example, the image sensor may be located on a circuit board. The image sensor may receive light and may convert the received light into an electrical signal. In addition, the image sensor may be configured of a plurality of pixels in an array form. Additionally, the image sensor may be located on the optical axis.

The substrate part 1270 may be in contact with a side portion of the housing. For example, the substrate part 1270 may be located on an outer surface (a first side surface) of the first side portion and an outer surface (a second side surface) of the second side portion of the housing, particularly the 2-2 housing, and may be in contact with the first side surface and the second side surface.

The second camera actuator may further include first stoppers ST1a and ST1b disposed at one end (or a front end) thereof and second stoppers ST2a and ST2ba disposed at the other end (or a rear end) thereof within the housing (or the 2-2 housing 1232).

The first stopper ST1 may be located at one end of the housing. For example, the first stopper ST1 may be located at an end portion of the 2-2 housing or the main barrel 1232 in a direction opposite to the optical-axis direction. In the embodiment, the first stopper ST1 may be located on an inner wall of the housing or the main barrel 1232. Among a first inner wall and a second inner wall of the main barrel 1232 that face each other in the optical-axis direction, the first stopper ST1 may be located on the first inner wall. Further, the first stopper ST1 may include a 1-1 stopper ST1a disposed on one side and a 1-2 stopper ST1b disposed on the other side. For example, the 1-1 stopper ST1a may be disposed on one side of the first inner wall. The 1-2 stopper ST1b may be located on the other side of the first inner wall. The 1-1 stopper ST1a may be located adjacent to the first side portion. The 1-2 stopper ST1b may be located adjacent to the second side portion. The one side and the other side may mean one side and an opposite side thereof in the second direction.

Alternatively, the 1-1 stopper ST1a may overlap a guiding part of the first lens assembly in the optical-axis direction. The 1-2 stopper ST1b may overlap a lens protrusion part of the first lens assembly in the optical-axis direction.

Further, the first stopper ST1 may further include a 1-3 stopper disposed on the other side of the main barrel 1232. The 1-3 stopper may be located to overlap a guiding part of the second lens assembly 1222b in the optical-axis direction.

Further, the second stopper ST2 may be located at the other end of the 2-2 housing or the main barrel 1232. For example, the second stopper ST2 may be located at an end portion of the 2-2 housing or the main barrel 1232 in the optical-axis direction. In the embodiment, the second stopper ST2 may be located on the inner wall of the housing or the main barrel 1232. Among the first inner wall and the second inner wall of the main barrel 1232 that face each other in the optical-axis direction, the second stopper ST2 may be located on the second inner wall. The first inner wall may be adjacent to the first camera actuator or the first lens assembly. The second inner wall may be adjacent to the image sensor.

Further, the second stopper ST2 may include a 2-1 stopper ST2a disposed on one side and a 2-2 stopper ST2b disposed on the other side. The 2-1 stopper ST2a may be located adjacent to the first side portion. The 2-2 stopper ST2b may be located adjacent to the second side portion. For example, the 2-1 stopper ST2a may be disposed on one side of the first inner wall. The 2-2 stopper ST2b may be disposed on the other side of the first inner wall.

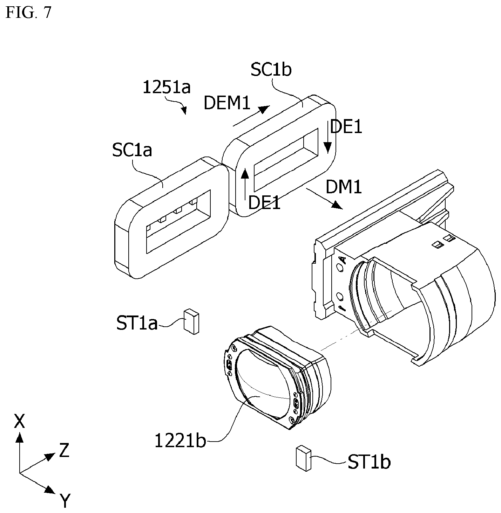

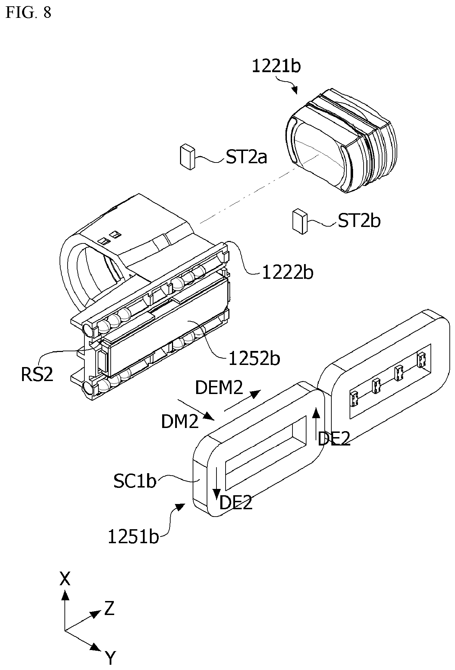

Referring to FIGS. 7 and 8, an electromagnetic force will be described below based on one coil. In the camera device according to the embodiment, an electromagnetic force DEM1 is generated between the first magnet 1252a and the first coil 1251a, and thus the first lens assembly 1222a may move along a rail located on the inner side surface of the housing via the first ball B1 parallel to the optical axis, that is, in the third direction (the Z-axis direction) or in a direction opposite to the third direction. At this time, the first magnet 1252a and the second magnet 1252b do not move to a region that faces edges of the first and second sub-coils. Thus, the electromagnetic force is formed based on the flow of a current in a region adjacent to the first and second sub-coils.

As described above, in the camera device according to the embodiment, the first magnet 1252a may be provided in the first lens assembly 1222a by, for example, a single-pole magnetization method. For example, in the embodiment, a surface (a first surface) that faces an outer surface of the first magnet 1252a may be the S pole. The outer surface of the first magnet 1252a may be a surface that faces the first coil 1251a. A surface opposite to the first surface may be the N pole. Thus, only one of the N pole and the S pole may be located to face the first coil 1251a. Here, the description is given based on the assumption that the outer surface of the first magnet 1252a is the S pole. Furthermore, the first coil 1251a is configured of a plurality of sub-coils, and current may flow in opposite directions in the plurality of sub-coils. That is, in a region of the first sub-coil SC1a adjacent to the second sub-coil SC2a, the current may flow in the same manner as "DE1."

In other words, a first region of the first sub-coil SC1a and a second region of the second sub-coil SC2a may have the same current direction. The first region of the first sub-coil SC1a is a region that overlaps the first driving magnet 1252a in the direction (the second direction) perpendicular to the optical-axis direction and is disposed perpendicular to the optical-axis direction (for example, disposed in the first direction). The second region of the second sub-coil SC2a is a region that overlaps the first driving magnet 1252a in the direction (the second direction) perpendicular to the optical-axis direction and is disposed perpendicular to the optical-axis direction (for example, disposed in the first direction).

Further, as shown in the embodiment, when a magnetic force is applied in the second direction (the Y-axis direction) from the S pole of the first magnet 1252a and the current DE1 flows in the first direction (the X-axis direction) from the first coil 1251a, the electromagnetic force DEM1 may act in the third direction (the Z-axis direction) according to the interaction of electromagnetic forces (for example, Fleming's left-hand rule).

At this time, since the first coil 1251a is fixed to the side portion of the housing, the first lens assembly 1222a in which the first magnet 1252a is disposed may move in a direction opposite to the Z-axis direction due to the electromagnetism DEM1 according to the current direction. That is, the optical driving magnet may move in a direction opposite to a direction of the electromagnetic force applied to the optical driving coil. In addition, the direction of the electromagnetic force may be changed according to the current of the coil and the magnetic force of the magnet.

Thus, the first lens assembly 1222a may move along a rail located on the inner surface of the housing via the first ball in the third direction or in a direction parallel to the optical-axis direction (in both directions). At this time, the electromagnetic force DEM1 may be controlled in proportion to the current DE1 applied to the first coil 1251a.

The first lens assembly 1222a or the second lens assembly 1222b may have a first recess RS1 in which the first ball or the second ball is seated. Additionally, the first lens assembly 1222a or the second lens assembly 1222b may have a second recess RS2 in which the first ball or the second ball is seated. A plurality of first recesses RS1 and second recesses RS2 may be provided. A length of the first recess RS1 in the optical-axis direction (the Z-axis direction) may be preset. In addition, a length of the second recess RS2 in the optical-axis direction (the Z-axis direction) may be preset. Thus, movement distances of the first ball and the second ball in the optical-axis direction may be adjusted within each of the recesses. In other words, the first recess RS1 or the second recess RS2 may be a stopper for the first and second balls.

In the camera device according to the embodiment, the second magnet 1252b may be provided in the second lens assembly 1222b, for example, by a single-pole magnetization method.

Furthermore, the first coil 1251a is configured of a plurality of sub-coils, and current may flow in opposite directions in the plurality of sub-coils. That is, in the region of the first sub-coil SC1a adjacent to the second sub-coil SC2a, the current may flow in the same manner as "DE1."

Additionally, in the embodiment, either the N pole or the S pole of the second magnet 1252b may be located to face the second coil 1251b. In the embodiment, the surface (the first surface) that faces the outer surface of the second magnet 1252b may be the S pole. In addition, the first surface may be the N pole. The following description is given based on the first surface being the N pole as illustrated.

Furthermore, the second coil 1251b is configured of a plurality of sub-coils, and current may flow in opposite directions in the plurality of sub-coils. That is, in a region of the first sub-coil SC1b adjacent to the second sub-coil SC2b, the current may flow in the same manner as"DE2."

In the embodiment, when a magnetic force DM2 is applied in the second direction (the Y-axis direction) from the first surface (the N pole) of the second magnet 1252b, and a current DE2 flows in the first direction (the X-axis direction) in the second coil 1251b corresponding to the N pole, an electromagnetic force DEM2 may act in the third direction (the Z-axis direction) according to the interaction of electromagnetic forces (for example, Fleming's left-hand rule).

At this time, since the second coil 1251b is fixed to the side portion of the housing, the second lens assembly 1222b in which the second magnet 1252b is disposed may move in the direction opposite to the Z-axis direction due to the electromagnetism DEM2 according to the current direction. For example, as described above, the direction of the electromagnetic force may be changed according to the current in the coil and the magnetic force of the magnet. Thus, the second lens assembly 1222b may move along a rail located on the inner surface of the housing via the second ball B2 in a direction parallel to the third direction (the Z-axis direction). At this time, the electromagnetic force DEM2 may be controlled in proportion to the current DE2 applied to the second coil 1251b.

Referring to FIG. 9, in the camera device according to the embodiment, the driving part may provide driving forces F3A, F3B, F4A, and F4B that move the first lens assembly 1222a and the second lens assembly 1222b of the lens part 1220 in the third direction (the Z-axis direction). The driving part may include the optical driving coil 1251 and the optical driving magnet 1252 as described above. The lens part 1220 may move in the third direction (the Z-axis direction) due to an electromagnetic force formed between the optical driving coil 1251 and the optical driving magnet 1252.

At this time, the first coil 1251a and the second coil 1251b may be disposed in the holes formed in the side portions (for example, the first side portion and the second side portion) of the housing 1230. The second coil 1251b may be electrically connected to the second substrate 1272. The first coil 1251a may be electrically connected to the first substrate 1271. Thus, the first coil 1251a and the second coil 1251b may receive a driving signal (for example, a current) from a driving driver on the circuit board of the circuit board 1300 through the substrate part 1270.

At this time, the first lens assembly 1222a on which the first magnet 1252a is mounted may move in the third direction (the Z-axis direction) due to the electromagnetic forces F3A and F3B between the first coil 1251a and the first magnet 1252a. Further, the second lens group 1221b mounted on the first lens assembly 1222a may also move in the third direction.

The second lens assembly 1222b on which the second magnet 1252b is mounted may move in the third direction (the Z-axis direction) due to the electromagnetic forces F4A and F4B between the second coil 1251b and the second magnet 1252b. Additionally, the third lens group 1221c mounted on the second lens assembly 1222b may also move in the third direction.

Accordingly, as described above, a focal length or magnification of the optical system may be changed by the movement of the second lens group 1221b and the third lens group 1221c. In the embodiment, the magnification may be changed by the movement of the second lens group 1221b. In other words, zooming may be achieved. Additionally, the focus may be adjusted by the movement of the third lens group 1221c. In other words, auto-focusing may be achieved.

Further, the first Hall sensor 1253a and the second Hall sensor 1253b may be disposed in at least one of the first sub-coil and the second sub-coil. For example, the first Hall sensor 1253a and the second Hall sensor 1253b may overlap in the second direction. Alternatively, the first Hall sensor 1253a and the second Hall sensor 1253b may not overlap in the second direction. Alternatively, the first Hall sensor 1253a and the second Hall sensor 1253b may partially overlap in the second direction.

According to the driving of the first lens assembly, the first lens assembly 1222a may be located as close as possible to the first stoppers ST1a and ST1b. At this time, a distance between the guiding part and the 1-1 stopper ST1a in the first lens assembly 1222a may be reduced. In addition, a distance between the 1-2 stopper ST1b and the lens protrusion part of the first lens assembly may also be reduced.

That is, when the first lens assembly 1222a moves to the maximum toward the first camera actuator, the first lens assembly 1222a may collide with the 1-1 stopper ST1a and the 1-2 stopper ST1b. The 1-1 stopper and the 1-2 stopper may collide with the first lens assembly simultaneously or sequentially when the first lens assembly moves. In the embodiment, the 1-1 stopper and the 1-2 stopper may collide with the first lens assembly simultaneously when the first lens assembly moves.

Thus, even when a lens made of glass is disposed within the first lens assembly 1222a (or the second lens assembly) (for example, at the front end), collision may be minimized at the maximum movement position (a mecha position) of the first lens assembly 1222a (or the second lens assembly). That is, the phenomenon of lens breakage may be suppressed. For example, at least one of the first lens assembly and the second lens assembly may include a lens including glass. The glass may be located outermost within the first lens assembly or the second lens assembly.

As a modified example, in the event of a sequential collision, the shock may be primarily absorbed by the guiding part having a large volume, and thus damage to the first lens assembly may be minimized.

Similarly, the second stopper ST2b and the second lens assembly 1222b may collide with each other. That is, when the second lens assembly 1222b moves to the maximum in the direction of the image sensor or the optical-axis direction, the second lens assembly 1222b may collide with the 2-2 stopper ST2b and the 2-1 stopper ST2a. Thus, even when a lens made of glass is disposed within the second lens assembly 1222b, collision at the maximum movement position (the mecha position) of the first lens assembly 1222a may be minimized. That is, the phenomenon of lens breakage may be suppressed. The same is applied to the modified example.

In other words, when the first lens assembly 1222a moves, the 1-1 stopper ST1a and the 1-2 stopper ST1b may come into contact with the first lens assembly 1222a. When the first lens assembly 1222a moves to the maximum such as mecha-to-mecha, the first lens assembly 1222a may come into contact with the first stoppers ST1a and ST1b. For example, the first lens assembly 1222a may move to one end in the optical-axis direction or one end in the direction opposite to the optical-axis direction. At this time, the first lens assembly 1222a may move to a point at which it comes into contact with the first stopper or the second stopper. For example, at the movement of the first lens assembly 1222a, the camera module may be in a tele or wide state. When the first lens assembly 1222a comes into contact with the first stopper, it may be in the wide state, and when the first lens assembly 1222a comes into contact with the second stopper, it may be in the tele state. This may be changed in various ways according to the driving thereof.

Due to the first stopper, the shock due to the movement of the first lens assembly 1222a and the second lens assembly 1222b may be reduced. As a result, the reliability of the first lens assembly 1222a and the second lens assembly 1222b as well as the reliability of the second lens group and the third lens group inside may be improved as described above. Furthermore, a range of movement of the first lens assembly 1222a and the second lens assembly 1222b is limited, and accurate magnification or the like may be achieved.

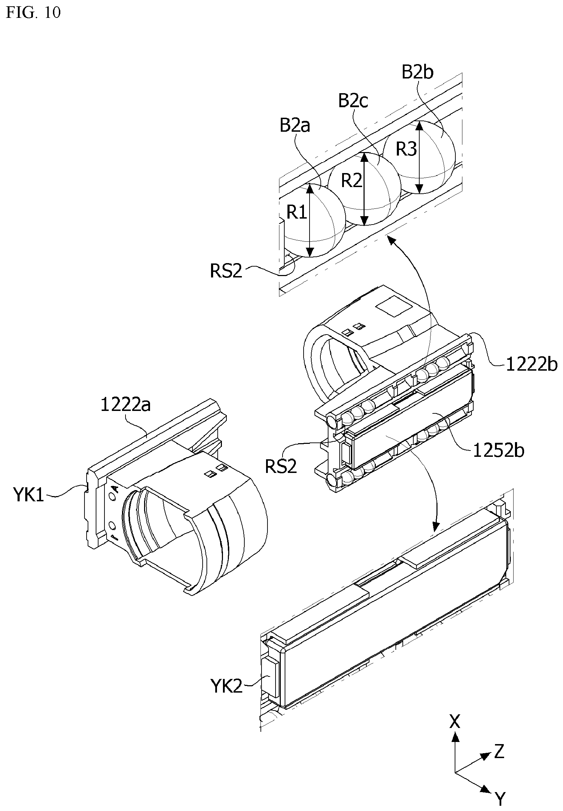

FIG. 10 is a perspective view of a configuration of a part of the second camera actuator according to the embodiment.

Referring to FIG. 10, the first lens assembly 1222a and the second lens assembly 1222b may be spaced apart in the optical-axis direction (the Z-axis direction).

The second guide part may be disposed to face the first guide part. In the embodiment, the first guide part and the second guide part may at least partially overlap in the second direction (the Y-axis direction). With such a configuration, space efficiency of the driving part for moving the first and second lens assemblies within the second camera actuator is improved, and miniaturization of the second camera actuator may be easily achieved.

The first ball, the first coil, and the like may be disposed adjacent to the first guide part as described above, and the second ball, the second coil, and the like may be disposed adjacent to the second guide part as described above.

Additionally, according to the embodiment, the first and second lens assemblies 1222a and 1222b may include yokes YK1 and YK2, respectively, disposed on side surfaces thereof.

A first yoke YK1 may be located on the side surface of the first lens assembly 1222a. A second yoke YK2 may be located on the side surface of the second lens assembly 1222b. At least a part of each of the first yoke YK1 and the second yoke YK2 may extend outward. Thus, the first yoke YK1 may surround at least a part of the side surface of the first magnet 1252a. As illustrated, the first yoke YK1 may be formed in various structures that surround the inner surface and a part of the side surface of the first magnet 1252a. For example, the first yoke YK1 may be configured of separate members, and each of the separate members may be located on the inner side and the side surface of the first magnet 1252a. Thus, a binding force between the unipolarly magnetized optical driving magnet and the yoke may be improved. Similarly, the second yoke YK2 may surround at least a part of the side surface of the second magnet 1252b. As illustrated, the second yoke YK2 may be formed in various structures that surround the inner surface and a part of the side surface of the second magnet 1252b. For example, the second yoke YK2 may be configured of separate members, and each of the separate members may be located on the inner and side surfaces of the second magnet 1252b.

Furthermore, the yoke may be located to be coupled to the optical driving coil as well as the optical driving magnet.

A plurality of balls may be located on the outer surface of the lens assembly. As described above, the first ball may be located on the outer surface of the first lens assembly 1222a. The second ball may be located on the outer surface of the second lens assembly 1222b.

A plurality of first balls and second balls may be provided. For example, the plurality of first balls may be disposed side by side in one recess of the first lens assembly 1222a in the optical-axis direction (the Z-axis direction). Additionally, the plurality of second balls may be disposed side by side in one recess of the second lens assembly 1222b in the optical-axis direction (the Z-axis direction).

For example, the second balls B2 may include a first sub-ball B2a, a second sub-ball B2b, and a third sub-ball B2c. The first sub-ball B2a, the second sub-ball B2b, and the third sub-ball B2c may be disposed side by side in the optical-axis direction. Thus, the first sub-ball B2a, the second sub-ball B2b, and the third sub-ball B2c may at least partially overlap each other in the optical-axis direction.

The first sub-ball B2a and the second sub-ball B2b may be located at the edges of the plurality of balls. The third sub-ball B2c may be located between the first sub-ball B2a and the second sub-ball B2b.

The plurality of balls may have the same or different diameters. For example, at least some of the first sub-ball B2a, the second sub-ball B2b, and the third sub-ball B2c may have the same diameters R1, R3, and R2. Additionally, the first sub-ball B2a, the second sub-ball B2b, and the third sub-ball B2c may have different diameters R1, R3, and R2.

As an example, the diameters R1 and R3 of the balls (the first and second subballs) located at the edges may be smaller than the diameter R2 of the ball (the third sub-ball) located between the plurality of balls. For example, the diameters R1 and R3 of the first sub-ball B2a and the second sub-ball B2b may be smaller than the diameter R2 of the third sub-ball B2c. With such a configuration, the movement of the lens assembly by the plurality of balls may be performed accurately without being tilted to one side.

This description of the plurality of balls may be equally applied to the first ball.

In addition, as described above, the plurality of optical driving magnets may be provided and may include the first magnet and the second magnet. The first magnet and the second magnet may be disposed to face each other with the same poles disposed on the outside. That is, each of the first surface (the outer surface) of the first magnet and the first surface (the outer surface) of the second magnet may have a first pole. Each of the second surface (the inner surface) of the first magnet and the second surface (the inner surface) of the second magnet may have a second pole.

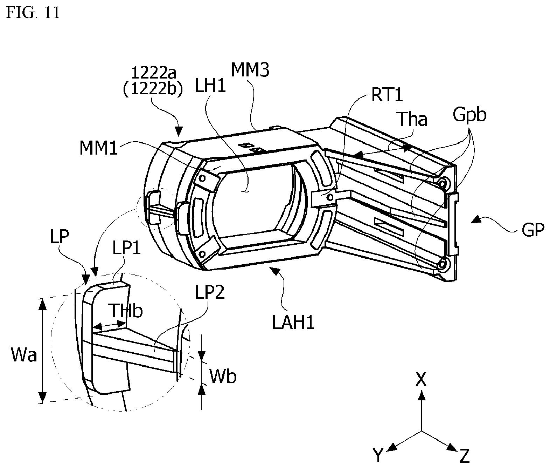

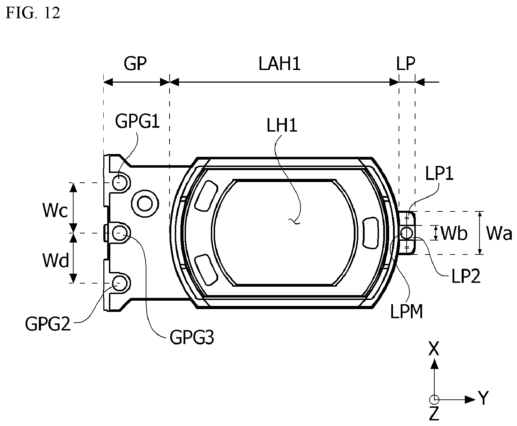

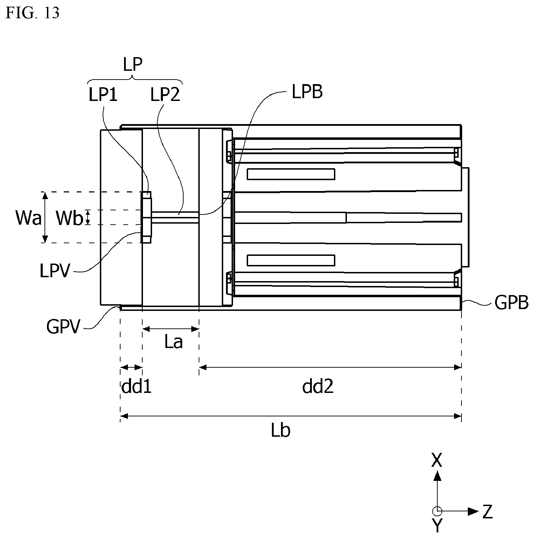

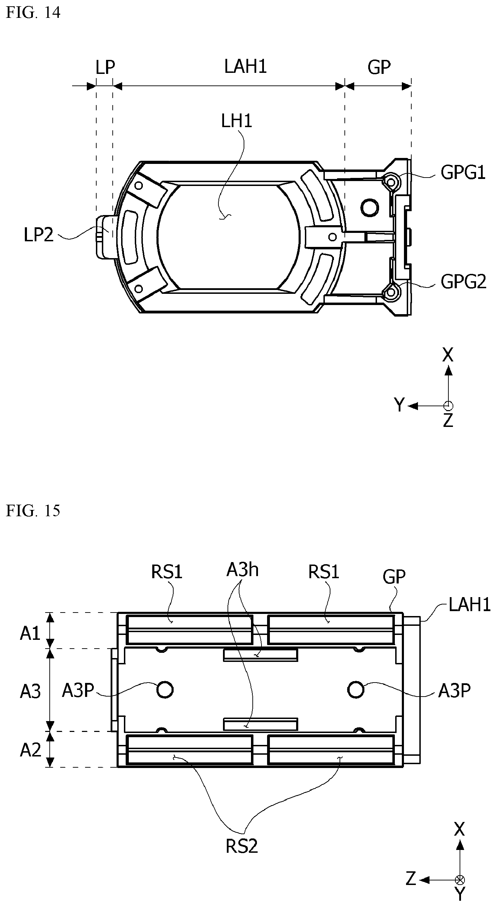

FIG. 11 is a perspective view of the first lens assembly (or the second lens assembly) according to the embodiment, FIG. 12 is a front view of the first lens assembly (or the second lens assembly) according to the embodiment, FIG. 13 is a side view of the first lens assembly (or the second lens assembly) according to the embodiment, FIG. 14 is a rear view of the first lens assembly (or the second lens assembly) according to the embodiment, and FIG. 15 is another side view of the first lens assembly (or the second lens assembly) according to the embodiment.

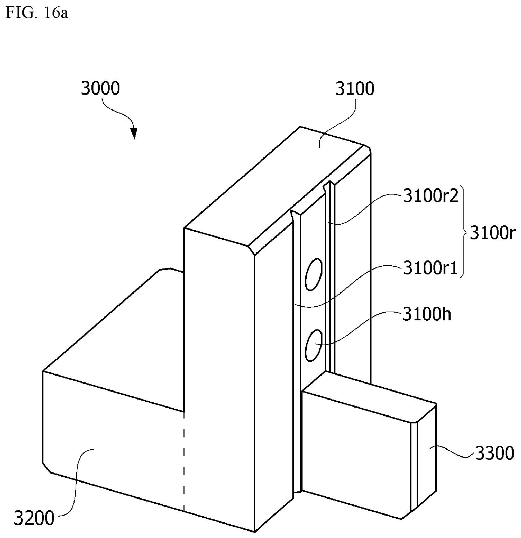

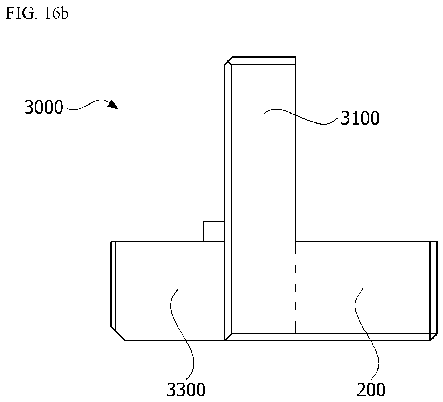

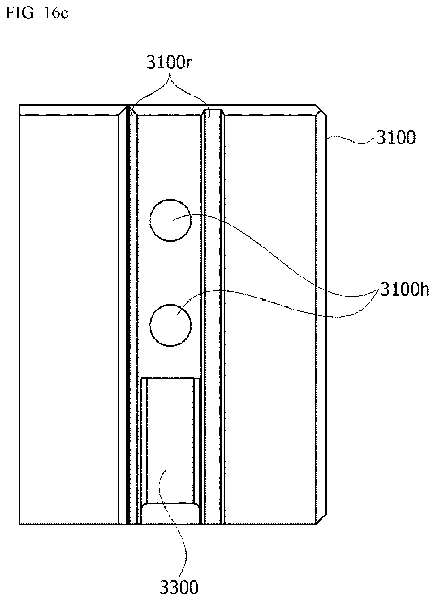

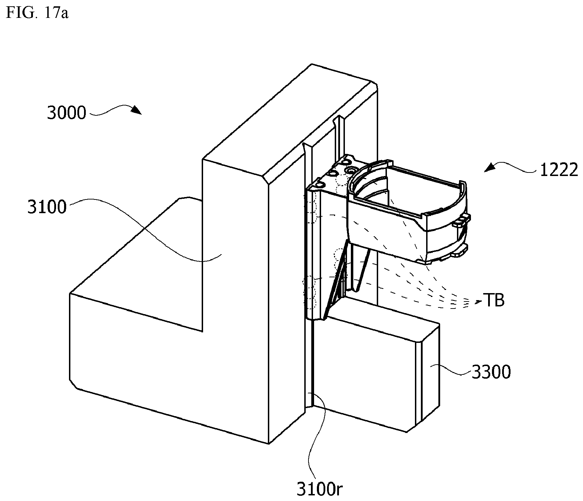

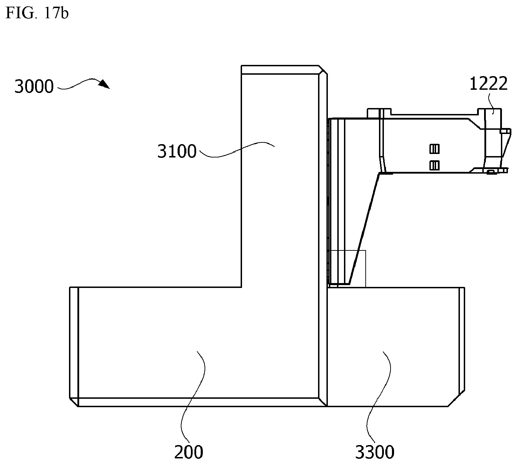

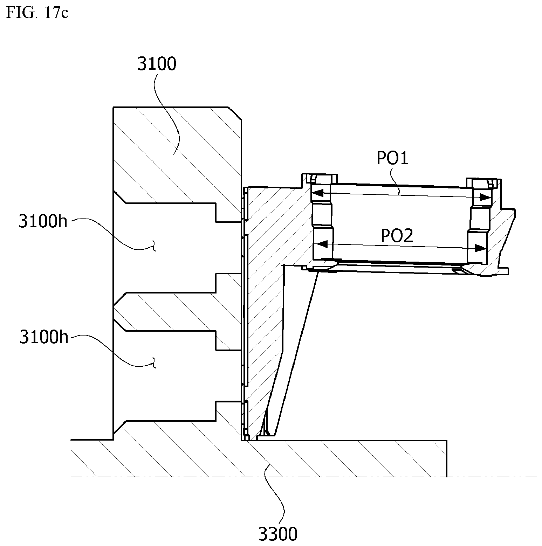

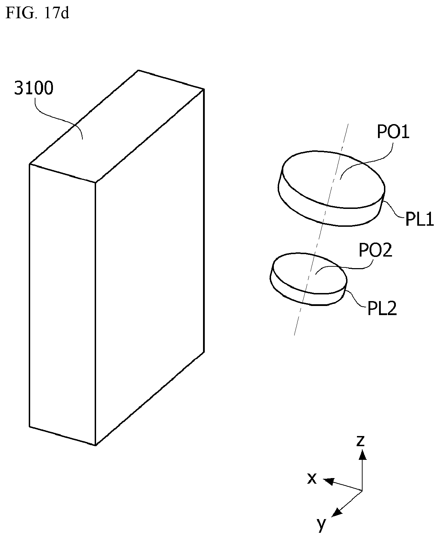

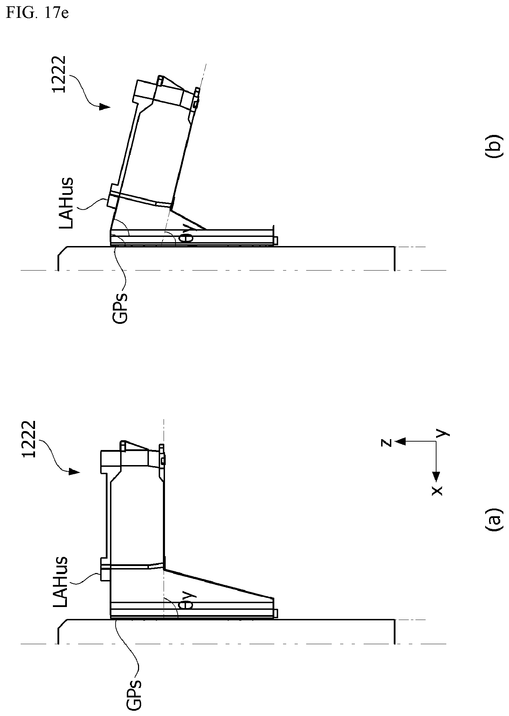

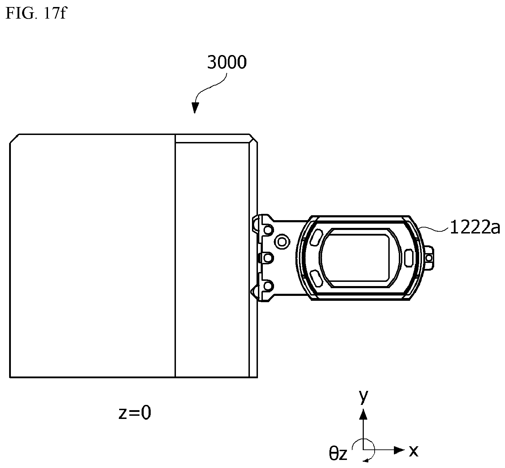

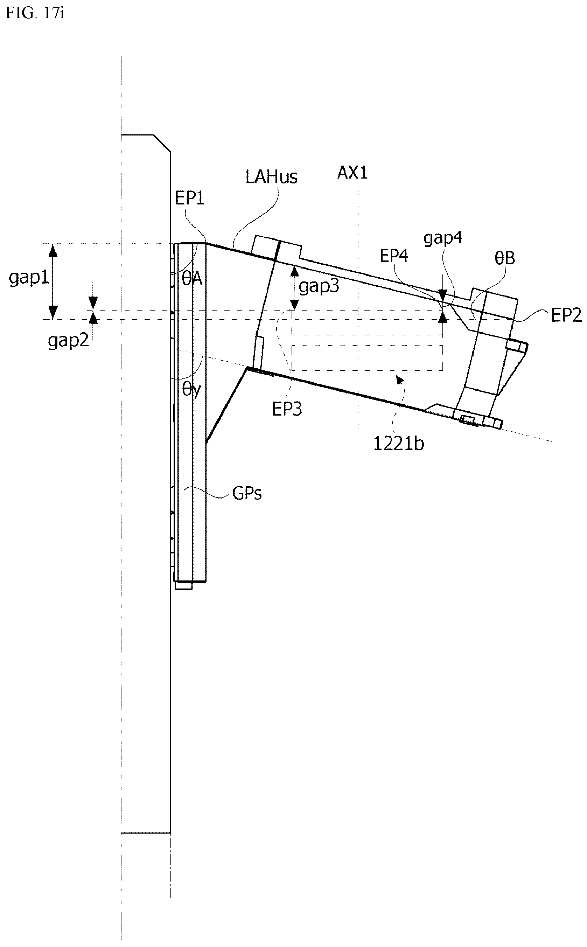

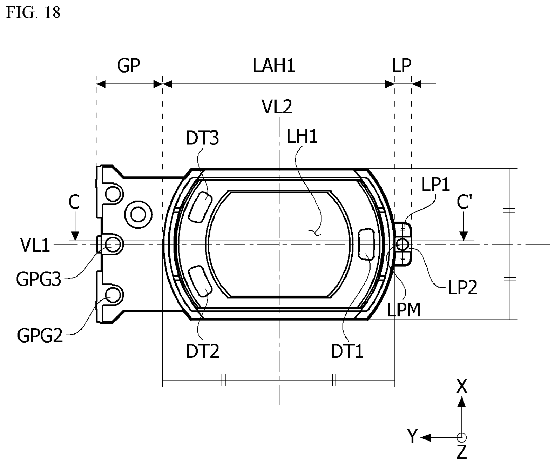

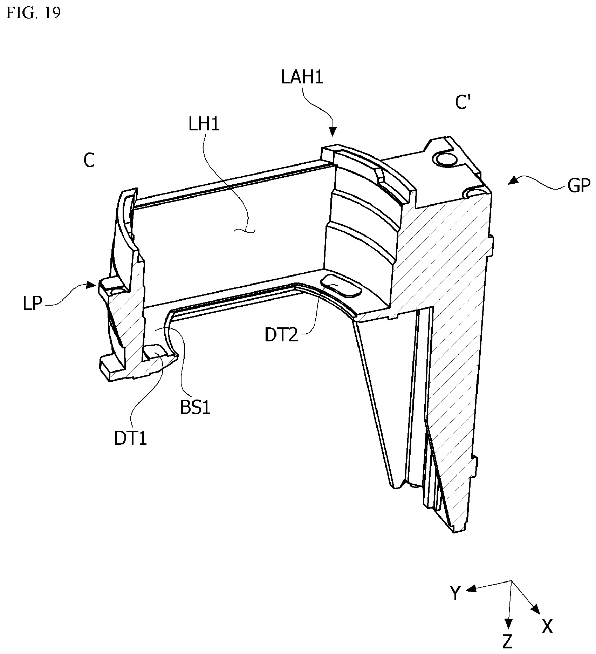

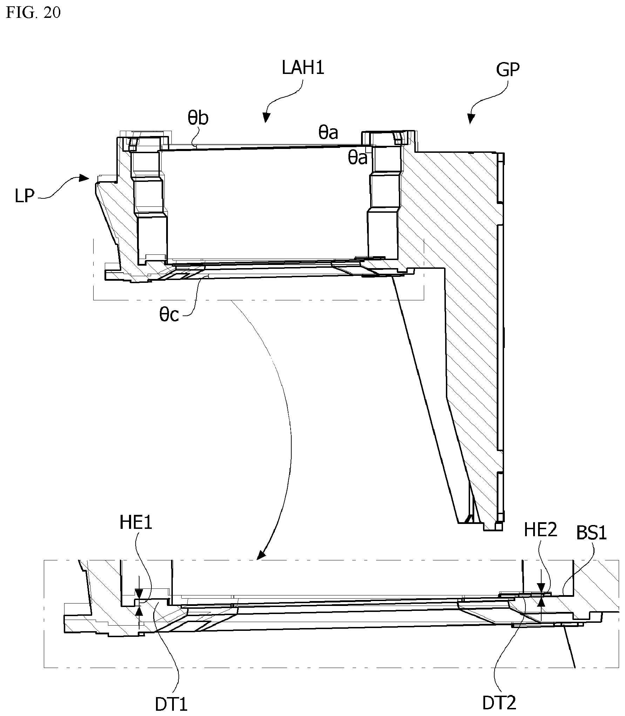

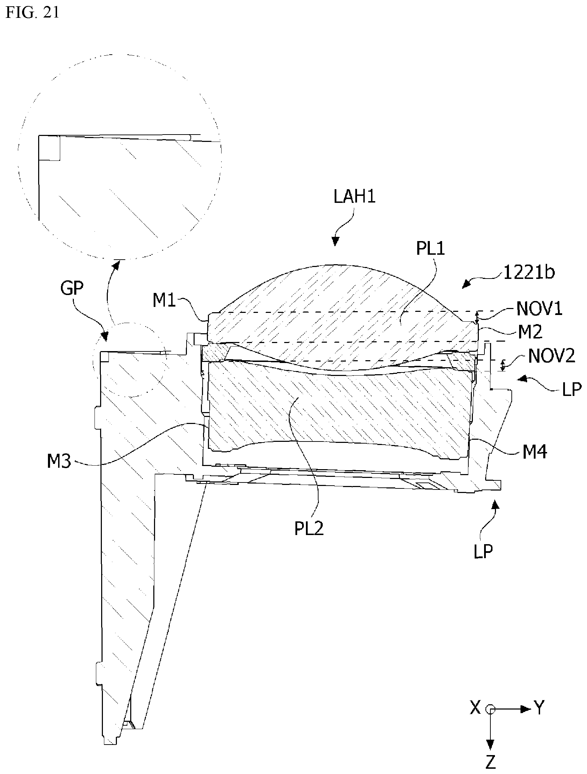

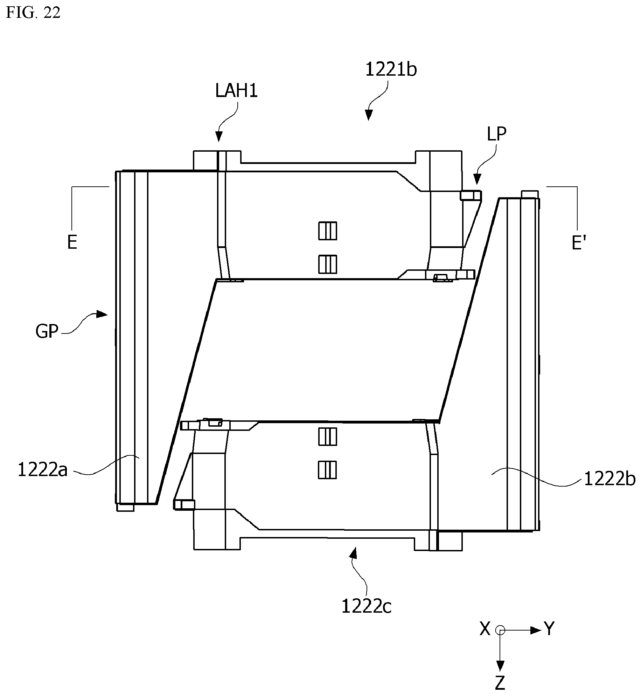

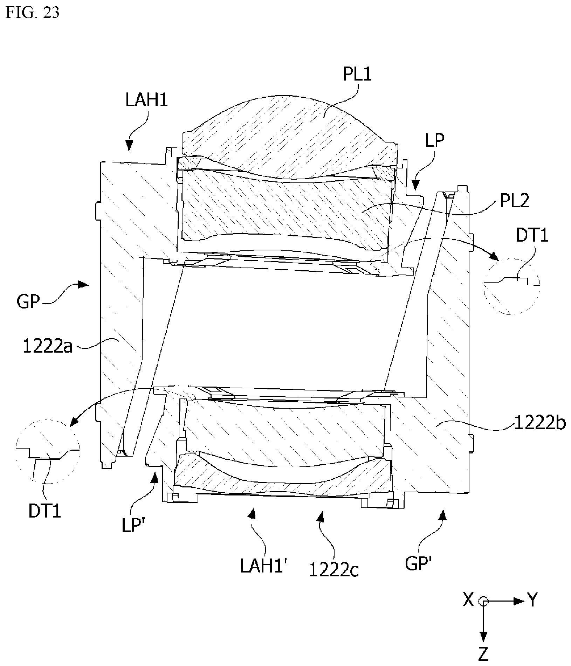

FIG. 16A is a perspective view of a measurement device according to the embodiment, FIG. 16B is a side view of the measurement device according to the embodiment, FIG. 16C is another side view of the measurement device according to the embodiment, FIG. 17A is a perspective view of a measurement ball, the measurement device, and the first lens assembly according to the embodiment, FIG. 17B is a side view of FIG. 17A, FIG. 17C is a partial cutaway view of FIG. 17B, FIG. 17D is a diagram for describing a measurement method using the measurement device according to the embodiment, FIG. 17E is a diagram illustrating various shapes of the lens assembly according to the embodiment, FIGS. 17F to 17H are diagrams for describing an inclination angle of the measurement method using the measurement device according to the embodiment, FIG. 17I is a cutaway view and an enlarged view of the second camera actuator according to the embodiment, FIG. 18 is another side view of the first lens assembly (or the second lens assembly) according to the embodiment, FIG. 19 is a perspective view taken along line C-C' in FIG. 18, FIG. 20 is a diagram taken along line C-C' of FIG. 18, FIG. 21 is a diagram in which a lens group is accommodated in FIG. 18, FIG. 22 is a drawing of the first lens assembly and the second lens assembly according to the embodiment, and FIG. 23 is a diagram taken along line E-E' in FIG. 22.

Referring to FIG. 11, as described above, the first lens assembly 1222a and the second lens assembly 1222a may move in the optical-axis direction or the third direction (the Z-axis direction). The following description is given based on the first lens assembly 1222a, but the description of the first lens assembly may be equally applied to the second lens assembly 1222a. Furthermore, the first lens assembly 1222a and the second lens assembly 1222a may be disposed side by side along the optical axis, so that the respective guiding parts thereof are located to face each other. For example, the first lens assembly 1222a and the second lens assembly 1222a may be located in a converse or corresponding manner with respect to the optical axis.

At least one of the first lens assembly 1222a and the second lens assembly 1222b may include an accommodation part (a lens holder LAH1) for accommodating a lens, a guiding part GP, and a lens protrusion part LP. Hereinafter, the description is given based on the first lens assembly 1222a as described above.

The accommodation part or first lens holder LAH1 has a first lens hole LH1. Hereinafter, it is described as the accommodation part LAH1. A lens may be disposed in the first lens hole LH1. That is, the first lens hole LH1 may accommodate a lens. At this time, a plurality of lenses may be provided, and for example, at least one may be made of glass or the like.

Further, the guiding part GP may be in contact with the accommodation part LAH1, and the ball part may be disposed. As described above, the ball part may include the first ball and the second ball. The first ball and the second ball may be located or mounted in the first lens assembly 1222a and the guide groove. Thus, when a driving force (for example, an electromagnetic force) is generated by the driving part, the first lens assembly 1222a may move in the optical-axis direction due to the rolling motion of the first ball and the second ball.

The lens protrusion part LP may be in contact with the accommodation part LAH1 and may correspond to the guiding part GP.

In the embodiment, the guiding part GP may be located on one side surface or one side portion of the accommodation part LAH1. The lens protrusion part LP may be located on the other side surface or the other side portion of the accommodation part LAH1. For example, the guiding part GP may be located on the side opposite to the lens protrusion part LP with respect to the accommodation part LAH1.

Additionally, the lens protrusion part LP according to the embodiment may include a plate LP1 and a support part LP2. The plate LP1 may be located at a front end of the support part LP2. The support part LP2 may be connected to the plate LP1 and may be located at a rear end of the plate LP1. Here, the front end means an end portion in a direction opposite to the optical-axis direction, and the rear end means an end portion in the optical-axis direction.

A height Wa of the plate LP1 may be greater than a height Wb of the support part LP2. Here, the height corresponds to a length in the first direction (the X-axis direction). Furthermore, a thickness THb of the lens protrusion part LP or the support part LP2 may decrease along the optical axis. Here, the thickness corresponds to a length in the second direction (the Y-axis direction). Furthermore, the length corresponds to a length in the third direction (the Z-axis direction). With such a structure, removal may be easily performed while a support capacity for the plate LP1 is maintained. In addition, a support force of a first pin groove located in the plate LP1 is improved, and thus flatness may be easily maintained during removal.

In addition, the length of the plate LP1 according to the embodiment may be shorter than the length of the support part LP2. Thus, the ease of removal and the support capacity may be further improved.

Further, the guiding part GP according to the embodiment may include a side plate GPa and a wing part GPb. The wing part GPb may be in contact with both the side plate GPa and the accommodation part LAH1. The wing part GPb may have a thickness THa that decreases in the optical-axis direction. In addition, a plurality of wing parts GPb may be provided. With such a configuration, removal may be easily performed while the support capacity for the side plate GPa is maintained. In addition, a support capacity of a second pin groove located in the side plate GPa is improved, and thus the flatness may be easily maintained during the removal.

Furthermore, a retainer RT1 may be located on a first outer surface MM1 of the first lens assembly 1222a. The first lens assembly and the second lens assembly may have retainers located on outer surfaces (first and second outer surfaces) facing each other. The retainer RT1 may be coupled to the first outer surface MM1 through a protrusion/groove structure. Furthermore, a bonding material including epoxy or the like may be applied to the first outer surface MM1. As a result, bonding strength between the first outer surface MM1 and the retainer RT1 may be improved. The retainer RT1 may prevent the lens located within the first lens hole LH1 from falling out. In addition, a plurality of grooves or protrusions may be formed on the first outer surface MM1. In addition, a plurality of marks (for example, grooves) may be located on the side surface of the first lens assembly 1222a in the first direction. The positions of the first and second lens assemblies may be recognized through the marks, and inspection of driving of the first and second lens assemblies may be performed using the recognition.

Referring to FIGS. 12 to 14, in the embodiment, the lens protrusion part LP may have a first pin groove LPG disposed in an upper surface LPU of the plate LP1. The first pin groove LPG may be located at the center of the upper surface LPU of the plate LP1. For example, the first pin groove LPG may be located at a portion or line that bisects the upper surface LPU of the plate LP1 in the first direction (the X-axis direction). Additionally, a center LPM of the first fin groove LPG may be located on a line that bisects the upper surface LPU of the plate LP1 in the first direction (the X-axis direction). The first fin groove LPG may have various shapes such as a circle or block. For example, the shape of the first fin groove LPG may correspond to a shape of an ejector fin.

The first pin groove LPG may overlap the support part LP2 in the optical-axis direction or in the third direction (the Z-axis direction). With such a configuration, flatness of the first lens assembly may be maintained even when a force is applied by the ejector pin to the side of the first pin groove LPG with which the ejector pin is in close contact for removal.

Additionally, the guiding part GP may include a second pin groove GPG disposed in an upper surface GPU of the guiding part GP. A plurality of second pin grooves GPG may be provided. For example, the second pin grooves GPG may include a 2-1 pin groove GPG1, a 2-2 pin groove GPG2, and a 2-3 pin groove GPG3. The 2-3 pin groove GPG3 may be located between the 2-1 pin groove GPG1 and the 2-2 pin groove GPG2. Furthermore, the 2-1 pin groove GPG1, the 2-2 pin groove GPG2, and the 2-3 pin groove GPG3 may overlap each other in the first direction (the X-axis direction).

The plurality of second pin grooves GPG may all have the same separation distances Wc and Wd from adjacent second pin grooves. Thus, a force applied to the second pin grooves GPG is uniformly applied to the guiding part, and thus bending of the guiding part may be suppressed.

In addition, according to the embodiment, a length Lb of the guiding part GP in the third direction may be greater than a length La of the lens protrusion part LP in the third direction. Conversely, the length La of the lens protrusion part LP may be less than the length Lb of the guiding part GP.

In addition, the upper surface GPU of the guiding part GP may be located at a front end of an upper surface LPU of the lens protrusion part LP. Further, a lower surface GPB of the guiding part GP may be located at a rear end of a lower surface LPB of the lens protrusion part LP. A length of the guiding part GP in the first direction may be greater than a length of the lens protrusion part LP in the first direction. Thus, the guiding part GP may be greater in length in both the first direction and the third direction than the lens protrusion part LP.

Corresponding to the shapes of the guiding part GP and the lens protrusion part LP, the number of second pin grooves GPG may be greater than the number of first pin grooves LPG. With such a configuration, the straightness or flatness of the guiding part GP may be maintained even when a force is applied to the plurality of second pin grooves GPG by the ejector pin. Thus, the guiding part or the first lens assembly may move accurately in the Z-axis direction through the ball part located in the recess of the guiding part GP. In other words, zooming or auto-focusing may be performed along the optical axis to suppress the occurrence of misalignment of the optical axis.

Further, the first pin groove LPG and the second pin groove GPG may overlap at least partially. For example, the first pin groove LPG and the second pin groove GPG may overlap each other in the second direction (the Y-axis direction). For example, the 2-3 pin groove GPG3 may overlap the first pin groove LPG in the second direction.

In addition, the first pin groove LPG may be located at a rear end of the second pin groove GPG. Thus, even when a force is applied to the lens protrusion part LP and the guiding part GP, bending caused by a difference in shape or size may be suppressed.

Further, the wing parts GPb may overlap the second pin groove GPG in the optical-axis direction (the Z-axis direction). For example, the plurality of wing parts GPb may overlap the second pin grooves GPG in the optical-axis direction. With such a configuration, even when a force is applied by the ejector pin to the second pin groove side with which the ejector pin is in close contact for removal, the flatness of the first lens assembly, particularly the flatness of the guiding part GP in which the ball is disposed, may be maintained.

Additionally, the centers of the plurality of second pin grooves GPG (for example, a center of the 2-3 pin groove) and the center LPM of the first pin groove LPG may be located on a virtual line parallel to the second direction (the Y-axis direction). Thus, a phenomenon of the guiding part GP bending to either the upper or lower side, due to the force applied to the ejector pin during removal may be suppressed.

With further reference to FIG. 15, according to the embodiment, the side plate GPa of the guiding part GP has a first region A1, a second region A2, and a third region A3.

The third region A3 is located between the first region A1 and the second region A2. The first region A1, the third region A3, and the second region A2 may be sequentially located in a direction opposite to the first direction.

The first region A1 may include the first recess RS1. The second region A2 may include the second recess RS2. The first ball and the second ball may be mounted in the first recess RS1 and the second recess RS2, respectively.

Furthermore, a driving yoke may be disposed in the third region A3. The first magnet may be mounted on the driving yoke. The driving yoke may be mounted in the third region A3 and may be coupled to the guiding part GP. To this end, a yoke hole A3h or a coupling projection A3p may be further provided in the third region A3. The side plate GPa and the driving yoke may be coupled to each other through the yoke hole A3h or the coupling projection A3p. Additionally, a bonding material (for example, epoxy or the like) may be additionally applied to the third region A3.

Referring to FIGS. 16A to 16C and FIGS. 17A to 17B, a measurement device 3000 according to the embodiment may include a body 3100, a first protrusion part 3200, and a second protrusion part 330.

The body 3100 may be formed to extend in one direction. The body 3100 may extend to have a length greater than the length of the lens assembly in the optical-axis direction in the second camera actuator. In addition, the body 3100 may include a rail part 3100r formed on one surface thereof. A ball TB for measurement may be mounted on the rail part 3100r. The ball TB may come into contact with the first and second lens assemblies of the second camera actuator for measurement (hereinafter, described based on the first lens assembly 1222a or lens assembly 1222a). For example, the ball TB may be located between the first and second lens assemblies and the body 3100.

The rail part 3100r may include a first rail 3100r1 and a second rail 3100r2. The first rail 3100r1 and the second rail 3100r2 may be disposed to be spaced apart from each other. Further, the first rail 3100r1 and the second rail 3100r2 may be located to correspond to the first and second recesses of the lens assembly 1222a. A spacing between the first rail 3100r1 and the second rail 3100r2 may correspond to a spacing between the first and second recesses.

Furthermore, the first rail 3100r1 and the second rail 3100r2 may be various types of grooves. For example, the first rail 3100r1 and the second rail 3100r2 may be grooves of the same shape. Alternatively, the first rail 3100r1 and the second rail 3100r2 may be grooves of different shapes. For example, both the first rail 3100r1 and the second rail 3100r2 may be "V" shaped grooves. Alternatively, the first rail 3100r1 may have a "V" shape, and the second rail 3100r2 may have a hemispherical shape. Furthermore, the first rail 3100r1 and the second rail 3100r2 may have multiple contact points with the ball TB. Thus, the first rail 3100r1 and the second rail 3100r2 may have the same number of contact points with the ball TB. Alternatively, the first rail 3100r1 and the second rail 3100r2 may have a different number of contact points with the ball TB.

In this way, in the body 3100 according to the embodiment, the first rail 3100r1 and the second rail 3100r2 may be formed as grooves having the same or different structural shapes at the contact points with the ball TB.

The first protrusion part 3200 may have a structure extending outward from one surface of the body 3100. The first protrusion part 3200 may be a region extending in a vertical direction from the body 3100.

The second protrusion part 3200 may have a structure extending outward from the other surface of the body 3100. The second protrusion part 3200 may be a region extending in a vertical direction from the body 3100.

The first protrusion part 3100 and the second protrusion part 3200 may extend in opposite directions. Thus, the first protrusion part 3100 and the second protrusion part 3200 may at least partially overlap each other in the extension direction.

The second protrusion part 3200 may be located in a region between the rail parts 3100r. For example, the second protrusion part 3200 may be located in a region between the first rail 3100r1 and the second rail 3100r2.

Furthermore, the second protrusion part 3200 may be located on the same surface (the other surface) of the body 3100 as the surface on which the rail part 3100r is disposed. That is, the second protrusion part 3200 may support the lens assembly 1222a, which is a measurement target. As described above, the ball TB is mounted in the first and second recesses of the lens assembly and may move along the rail part 3100r. Thus, the guiding part of the lens assembly may be disposed to face the other surface of the body 3100. At this time, since the second protrusion part 3200 and the body 3100 are disposed perpendicular to each other, the bending of the lens assembly may be measured more accurately.

Further, the body 3100 may include at least one hole 3100h. The lens assembly mounted on the other surface of the body 3100 may be pressed toward the body 3100 through at least one hole 3100h. That is, during the measurement of the bending of the lens assembly, bonding strength between the lens assembly and the measurement device may be maintained.

Referring to FIGS. 17C to 17H, in the first lens assembly 1222a according to the embodiment, a lens is disposed in a lens hole, and the lens hole may have an operation for accommodating the lens. A measurement method according to the embodiment may include an operation of arranging the first lens assembly in the measurement device, an operation of calculating a central axis of the lens hole of the first lens assembly, and an operation of calculating an inclination angle for each axis of the first lens assembly based on the calculated central axis of the lens hole.

First, the first lens assembly may be disposed in the measurement device. As described above, the first lens assembly 1222a may be disposed on the second protrusion part 3300 to support the end portion of the guiding part. The measurement target is the lens assembly (the first and second lens assemblies). In addition, the ball disposed in the rail part may be brought into contact with the guiding part of the first lens assembly 1222a.

The central axis of the lens hole of the first lens assembly may be calculated. At this time, the central axis of the lens hole may be calculated through a contact or non-contact method. For example, in the case of the non-contact method, the central axis of the lens hole may be calculated through vision recognition or the like. For example, center points PO1 and PO2 may be calculated based on an inner surface of the lens hole or an outer diameter of a member (for example, a lens) to be accommodated in the lens hole. For example, the center point may correspond to a center point of each circular lens or a center point of the circular lens hole.

In the embodiment, the center points of two lenses or the center points of the inner diameters of two lens holes may be calculated. For example, a first point PO1 and a second point PO2 may be calculated.

Referring further to FIG. 17D, the first point PO1 may correspond to a center of a first accommodation lens PL1. The second point PO2 may correspond to a center of a second accommodation lens PL2.

The central axis (for example, the optical axis or the axis) of the lens hole may be calculated through the first point PO1 and the second point PO2. In FIGS. 17C to 17H, the axes are described as x, y, and z. In FIGS. 17C to 17H, an x-axis may correspond to a direction (or the second direction) opposite to the second direction (the Y-axis direction), a y-axis may correspond to the first direction (the X-axis direction or a direction opposite to the first direction), and a z-axis may correspond to a direction (or the third direction) opposite to the third direction (the Z-axis direction) as described above.

The first point PO1 and the second point PO2 may be calculated by selecting each measurement point of the lens hole through vision recognition. For example, the first point PO1 may be calculated by inputting an edge (for example, a point or reference coordinates) at an upper portion of the inner surface of the lens hole. The second point PO2 may be calculated by inputting an edge (for example, a point or reference coordinates) at a lower portion of the inner surface of the lens hole.

Thus, the first point PO1 and the second point PO2 may be calculated as coordinates (for example, x1, y1, z1, etc.) in a three-dimensional space. The central axis (for example, the optical axis or the axis) of the lens hole may be calculated using the first point PO1 and the second point PO2.

As in FIG. 17E, in the case of (A), an upper surface LAHus of the accommodation part in the first lens assembly 1222a may be perpendicular to an outer surface GPs of the guiding part. In this case, the optical axis of the lens hole of the accommodation part may be parallel to the optical-axis direction described above.

In contrast, due to an asymmetrical structure of the first lens assembly 1222a, the lens hole or the like of the first lens assembly 1222a may be distorted to one side. Thus, in the case of (B), the upper surface LAHus of the accommodation part in the first lens assembly 1222a may be non-perpendicular to the outer surface GPs of the guiding part. As illustrated, in the case of (A), θy may be 90 degrees, but in the case of (B), θy may not be 90 degrees.

The first lens assembly 1222a may calculate a tilt or inclination of the first lens assembly 1222a caused by distortion with respect to x, y, and z. As described below, by adjusting a length of an adjustment member for the inclination of the first lens assembly, the axis (the central axis or the optical axis) of the lens within the lens hole may be disposed parallel to the third direction.

That is, the inclination angle for each axis of the first lens assembly may be calculated based on the calculated central axis of the lens hole.

As in FIGS. 17F to 17H, by setting a position for each of the x, y, and z axes to '0', the inclination angle for each axis with respect to xy, yz, and zx planes may be calculated.

For example, a plane tangent to the ball may be a plane where x = 0. In addition, as described above, a virtual line that connects the first and second points which are the centers (the center points) of the two lenses (the first and second accommodation lenses) may be the optical axis.

The optical axis may satisfy the following Equation 1 for x, y, and z.

[Equation 1]

$$\frac{x-x3}{a} = \frac{y-y3}{b} = \frac{z-z3}{c}$$

Here, a, b, and c are measurable constant values, which may be calculated using the first and second points. In the embodiment, a, b, and c may be calculated by applying a value of the second point PO2.

That is, a, b, and c that satisfy this may be derived through Equation 2.

In other words, an equation of a straight line passing through two points which are the first point and the second point may correspond to the optical axis of the lens hole. An equation of the optical axis may be derived through the first and second points, and the above-described a, b, and c may also be calculated.

[Equation 2]

$$\frac{x4-x3}{a} = \frac{y4-y3}{b} = \frac{z4-z3}{c}$$

Moreover, in Equations 1 and 2, the first point PO1 may be (x3, y3, and z3), and the second point PO2 may be (x4, y4, andz4).

Moreover, after a, b, and c are calculated (after the equation for the optical axis is calculated), Equation 1 may be substituted with x4, y4, and z4 instead of x3, y3, and z3 of Equation 1. Furthermore, other coordinates on the optical axis may be substituted instead of x3, y3, and z3 of Equation 1.

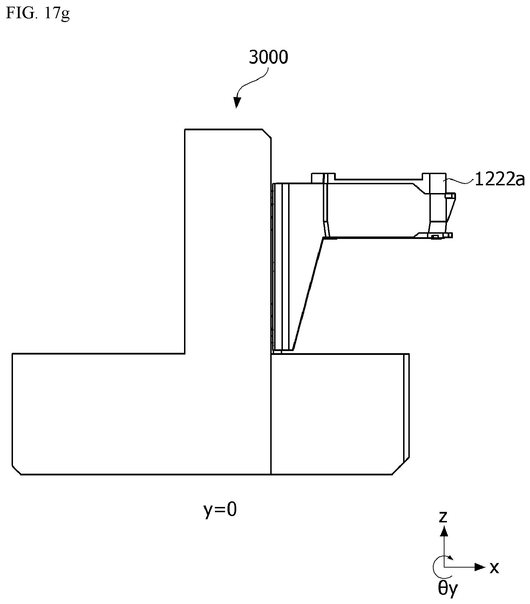

First, $\theta y$ may be calculated by projecting a plane where y = 0 as in FIG. 17G. That is, by removing the y component, an inclination of the straight line (the optical axis) may be calculated by projecting it onto a xz plane with y = 0 as a reference. At this time, each of the angles $\theta x$, $\theta y$, and $\theta z$ means an angle of rotation or tilt with respect to each of the axes x, y, and z. For example, the angle $\theta x$ means an angle of rotation or tilt of the first lens assembly with respect to the x-axis. In other words, $\theta z$ means an inclination angle of the first lens assembly or lens hole with respect to the z-axis. $\theta y$ means an inclination angle with respect to the y-axis. In addition, $\theta x$ means an inclination angle with respect to the x-axis.

Next, Equation 3 is derived by substituting y = 0 into Equation 1, and finally, $\theta y$ may be calculated through Equation 4 as in Equation 6.

[Equation 3]

$$\frac{x-x3}{a} = \frac{-y3}{b} = \frac{z-z3}{c}$$

[Equation 4]

$$Z = \frac{c}{a}(x-x3)+z3$$

[Equation 5]

$$\theta y = \tan^{-1}\left(\frac{c}{a}\right)$$

Similarly, $\theta z$ may be calculated by projecting a plane where z = 0 as in FIG. 17F.

For example, when z = 0 is substituted into Equation 1, Equation 6 is derived, and finally, $\theta z$ may be calculated as in Equation 7.

[Equation 6]

$$\frac{x-x3}{a} = \frac{y-y3}{b} = \frac{-z3}{c}$$

[Equation 7]

$$\theta z = \tan^{-1}\left(\frac{b}{a}\right)$$

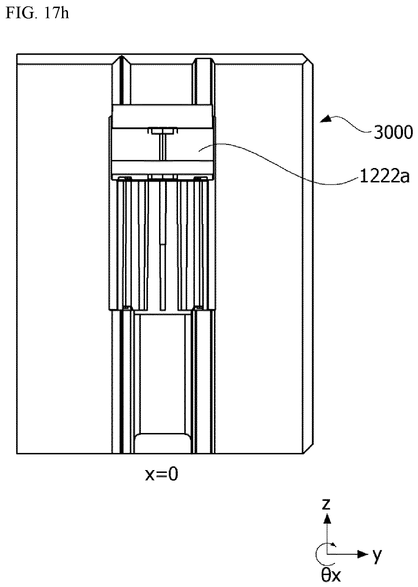

Similarly, $\theta x$ may be calculated by projecting a plane where x = 0 as in FIG. 17H.

For example, Equation 8 is derived by substituting x = 0 into Equation 1, and finally, $\theta x$ may be calculated as in Equation 9.

[Equation 8]

$$\frac{-x3}{a} = \frac{y-y3}{b} = \frac{z-z3}{c}$$

[Equation 9]

$$\theta x = \tan^{-1}\left(\frac{c}{b}\right)$$

In addition, the first lens assembly according to the embodiment is y-z symmetrical with respect to the x, y, and z-axes, and thus distortion with respect to the y-z plane may be reduced. That is, when an asymmetric structure is reflected, the first lens assembly (or the lens hole) according to the embodiment may be more likely to be inclined in the second direction (the y-axis direction).

Further referring to FIG. 17I, in the embodiment, in the first lens assembly 1222a, the upper surface LAHus of the accommodation part may be misaligned with the outer surface GPs of the guiding part. In the first lens assembly 1222a, the upper surface LAHus of the accommodation part may be non-perpendicular to the outer surface GPs of the guiding part.

Furthermore, the upper surface LAHus of the accommodation part LAH and the outer surface GPs of the guiding part GP adjacent to the ball part may be misaligned and may form a first angle $\theta_A$.

The upper surface LAHus of the accommodation part and a plane perpendicular to an axis AX1 of the lens group 1221b disposed in the lens hole may be misaligned. In addition, the upper surface LAHus of the accommodation part and the plane perpendicular to the axis AX1 of the lens group 1221b disposed in the lens hole may form a second angle $\theta_B$.

The first angle $\theta_A$ and the second angle $\theta_B$ may correspond in terms of size. For example, the first angle $\theta_A$ and the second angle $\theta_B$ may be similar to each other due to tolerance or the like and may have an error range of less than 10%.

Furthermore, the axis AX1 of the lens group 1221b may be parallel to the optical-axis direction (the Z-axis direction). This is because the lens group is inclined in a direction that compensates for the axis of the lens hole by an adjustment member described below. In other words, the axis of the lens hole may be misaligned with the axis AX1 of the lens group.

Additionally, the upper surface LAHus of the accommodation part may have a first end portion EP1 located on one side and a second end portion EP2 located on the other side in a direction (for example, the second direction (the Y-axis direction)) perpendicular to the optical-axis direction.

The upper surface of the lens group 1221b may have a third end portion EP3 located on one side and a fourth end portion EP4 located on the other side in the direction (for example, the second direction (the Y-axis direction)) perpendicular to the optical-axis direction.

A separation distance gap1 in the optical-axis direction (the Z-axis direction) between the first end portion EP1 and the second end portion EP2 may be greater than a separation distance gap2 in the optical-axis direction between the third end portion EP3 and the fourth end portion EP4. The third end portion EP3 and the fourth end portion EP4 may at least partially overlap each other in the second direction. Thus, the separation distance in the optical-axis direction between the third end portion EP3 and the fourth end portion EP4 may be zero or very small.

Further, the first end portion EP1 may be located in front of the second end portion EP2. For example, the first end portion EP1 may be located closer to the first camera actuator than the second end portion EP2. Furthermore, the second end portion EP2 may be located closer to the image sensor than the first end portion EP1.

The third end portion EP3 and the fourth end portion EP4 may have the same separation distance from the image sensor.

Furthermore, a separation distance gap3 in the optical-axis direction (the Z-axis direction) between the upper surface LAHus of the accommodation part and the first end portion EP1 may be greater than a separation distance gap4 in the optical-axis direction (the Z-axis direction) between the upper surface LAHus of the accommodation part and the second end portion EP2.

Referring further to FIGS. 18 to 20, the first lens assembly 1222a may further include a plurality of adjustment members. In the embodiment, the first lens assembly 1222a may include a first adjustment member DT1, a second adjustment member DT2, and a third adjustment member DT3.

The plurality of adjustment members DT1 to DT3 may be disposed on a bottom surface BS1 of the accommodation part LAH1. Additionally, the plurality of adjustment members DT1 to DT3 may extend from the bottom surface BS1 of the accommodation part LAH1 toward a lens received in the accommodation part. Alternatively, the plurality of adjustment members DT1 to DT3 may be located between a lens group (for example, the second lens group) and the bottom surface BS1 within the accommodation part LAH1. In the embodiment, the plurality of adjustment members DT1 to DT3 may be protrusions disposed or formed on the bottom surface BS1 of the accommodation part LAH1. The plurality of adjustment members DT1 to DT3 may be disposed to be spaced apart from each other.

For example, the first adjustment member DT1 may extend from the bottom surface BS1 of the accommodation part LAH1 toward the second lens group. Alternatively, the first adjustment member DT1 may extend in the optical-axis direction.

In the embodiment, the first adjustment member DT1 may be located on a first virtual line VL1 of the first lens assembly 1222a in the first direction (the X-axis direction) perpendicular to the optical-axis direction (the Z-axis direction). That is, the first virtual line VL1 may be a line that bisects a length of the first lens assembly 1222a in the second direction. The first virtual line VL1 may be parallel to the second direction.

In the embodiment, the first adjustment member DT1 may be located at the center of the length of the first lens assembly 1222a in the second direction. The first adjustment member DT1 may be located on the first virtual line VL1. With such a configuration, since the first lens assembly 1222a has an asymmetrical structure to the left or right with respect to the center, even when the guiding part is bent to one side during removal, the optical axis or center of the first lens assembly 1222a may be compensated for. That is, the first lens assembly 1222a may have an asymmetrical structure with respect to a second virtual line VL2 and a symmetrical structure with respect to the first virtual line VL1. The first lens assembly 1222a may contract on the right side (for example, on the guiding part side) of the second virtual line VL2. Therefore, degradation of optical performance may be suppressed. In particular, when the first lens assembly 1222a moves along the optical axis via the ball part, the optical axis may be distorted more significantly according to the asymmetric structure. According to the embodiment, the camera actuator and the first lens assembly may compensate for optical axis distortion due to a bent structure according to such an asymmetric structure. The second virtual line VL2 described above may be a bisector for the length of the accommodation part LAH1 in the second direction (the Y-axis direction).

In the embodiment, the concentricity of the first lens assembly 1222a may be increased due to the asymmetric structure described above. Thus, the concentricity of the lens may be compensated for by the adjustment member based on an amount of distortion caused by the asymmetric structure.

Further, the first adjustment member DT1 may be disposed to be spaced apart from the second adjustment member DT2. Additionally, the first adjustment member DT1 and the second adjustment member DT2 may be disposed to be spaced apart from the third adjustment member DT3.

The second adjustment member DT2 and the third adjustment member DT3 other than the first adjustment member DT1 may not be disposed on the first virtual line VL1. That is, the second adjustment member DT2 and the third adjustment member DT3 other than the first adjustment member DT1 may be disposed to be misaligned with the first virtual line VL1.

Thus, the second adjustment member DT2 and the third adjustment member DT3 may compensate for the bending of the first lens assembly 1222a in the first and third directions rather than the second direction (the Y-axis direction). Furthermore, the offset of the bending compensation through the first adjustment member DT1 may be minimized.

In the embodiment, the plurality of adjustment members DT1 to DT3 may have the same or different lengths in the optical-axis direction. In particular, the lengths of the first adjustment member DT1 and the second adjustment member (or the third adjustment member) in the optical-axis direction may be different from each other.

For example, a length HE1 of the first adjustment member DT1 in the optical-axis direction may be greater than a length HE2 of the second adjustment member DT2 in the optical-axis direction.

In particular, the first adjustment member DT1 may be located adjacent to the lens protrusion part LP. The first adjustment member DT1 may be located closer to the lens protrusion part LP than the second adjustment member or the third adjustment member. The second adjustment member DT2 (or the third adjustment member) may be located closer to the guiding part GP than the first adjustment member. Alternatively, the first adjustment member DT1 may be located adj acent to one side portion of the housing. For example, the first adjustment member DT1 may be located adjacent to the second side portion of the housing. The guiding part GP may be located adjacent to the first side portion. Further, the first adjustment member DT1 may be located on the side portion opposite to the side portion on which the ball part is disposed. Alternatively, the first adjustment member DT1 may be located on the side portion opposite to the first driving part.

In the embodiment, among the adjustment members, the first adjustment member DT1 closer to the lens protrusion part LP than the guiding part GP may have a greater length in the optical-axis direction than the other adjustment members. In other words, in the first lens assembly 1222a, the first adjustment member DT1 adjacent to the lens protrusion part LP that is relatively low in volume and weight (compared to the guiding member) rather than the guiding part GP that is high in volume and weight may have a greater length in the optical-axis direction than the other adjustment members. With such a configuration, even when the accommodation part LAH1 and the lens protrusion part LP are bent toward the guiding part GP according to the guiding part GP, the center of the second lens group may be aligned through the extending structure of the first adjustment member DT1. That is, the center of the lens group according to the bent structure may be compensated for.

Referring further to FIG. 21, in the accommodation part LAH1 of the first lens assembly 1222a according to the embodiment, the first accommodation lens PL1 and the second accommodation lens PL2 disposed sequentially in the optical-axis direction (the Z-axis direction) may be located. In addition, the second lens group 1221b may further include lenses other than the first accommodation lens PL1 and the second accommodation lens PL2.

In the embodiment, the first accommodation lens PL1 may include a first lens outer surface M1 adjacent to the lens protrusion part LP and a second lens outer surface M2 adjacent to the guiding part GP.

The second accommodation lens PL2 may include a third lens outer surface M3 adjacent to the lens protrusion part LP and a fourth lens outer surface M4 adjacent to the guiding part GP.

The first lens outer surface M1 and the second lens outer surface M2 may partially overlap each other in the second direction. Additionally, the first lens outer surface M1 and the second lens outer surface M2 may not at least partially overlap each other in the second direction. In the embodiment, the first lens outer surface M1 may have a region NOV1 in which the first lens outer surface M1 is misaligned with the second lens outer surface M2 in the second direction.

Further, the third lens outer surface M3 and the fourth lens outer surface M4 may partially overlap each other in the second direction. Additionally, the third lens outer surface M3 and the fourth lens outer surface M4 may not at least partially overlap in the second direction. In the embodiment, the third lens outer surface M3 may have a region NOV2 in which the third lens outer surface M3 is misaligned with the fourth lens outer surface M4 in the second direction.

Additionally, the maximum separation distances from the center of the accommodation part LAH1 to each of the first lens outer surface M1 and the second lens outer surface M2 may be different based on the center of the accommodation part LAH1. For example, the maximum separation distance from the center of the accommodation part LAH1 to the first lens outer surface M1 may be different from the maximum separation distance from the center of the accommodation part LAH1 to the second lens outer surface M2. In the embodiment, since the length of the first adjustment member DT1 is greater than the length of the other adjustment members, the maximum separation distance from the center of the accommodation part LAH1 to the first lens outer surface M1 may be smaller than the maximum separation distance from the center of the accommodation part LAH1 to the second lens outer surface M2.

Similarly, the maximum separation distances from the center of the accommodation unit LAH1 to each of the third lens outer surface M3 and the fourth lens outer surface M4 may be different based on the center of the accommodation unit LAH1. For example, the maximum separation distance from the center of the accommodation unit LAH1 to the third lens outer surface M3 may be different from the maximum separation distance from the center of the accommodation unit LAH1 to the fourth lens outer surface M4. In the embodiment, since the length of the first adjustment member DT1 is greater than the length of the other adjustment members, the maximum separation distance from the center of the accommodation part LAH1 to the third lens outer surface M3 may be less than the maximum separation distance from the center of the accommodation part LAH1 to the fourth lens outer surface M4.

Referring to FIGS. 22 and 23, the description of the first lens assembly and the second lens group described above may be equally applied to the second lens assembly and the third lens group. Hereinafter, as shown in the drawings, the guiding part of the second lens assembly 1222b is referred to as GP', the lens protrusion part of the second lens assembly 1222b is referred to as LP', and the accommodation part of the second lens assembly 1222b is referred to as LAH1'. In addition, the first adjustment member disposed on the bottom surface of the accommodation part LAH1' of the second lens assembly 1222b is referred to as DT1'.

More specifically, the guiding part GP of the first lens assembly 1222a may be located to face the guiding part GP' of the second lens assembly 1222b. For example, the guiding part GP of the first lens assembly 1222a may be located adjacent to the first side portion of the housing. That is, the guiding part GP of the first lens assembly 1222a may have a distance from the first side portion of the housing that is smaller than a distance from the second side portion of the housing.

Conversely, the guiding part GP' of the second lens assembly 1222b may be located adjacent to the second side portion of the housing. That is, the guiding part GP' of the second lens assembly 1222b may have a distance from the second side portion of the housing that is smaller than a distance from the first side portion of the housing.

Additionally, the lens protrusion part LP of the first lens assembly 1222a may be located to face the lens protrusion part LP' of the second lens assembly 1222b. The lens protrusion part LP of the first lens assembly 1222a may be located adjacent to the second side portion of the housing. And, the lens protrusion part LP' of the second lens assembly 1222b may be located adjacent to the first side portion of the housing.

The first adjustment member DT1 of the first lens assembly 1222a and the first adjustment member DT1' of the second lens assembly 1222b may be located to be misaligned from each other. For example, the first adjustment member DT1 of the first lens assembly 1222a and the first adjustment member DT1' of the second lens assembly 1222b may be disposed to be misaligned with each other in the optical-axis direction (the Z-axis direction). Additionally, the first adjustment member DT1 of the first lens assembly 1222a may be located closer to the second side portion than the first adjustment member DT1' of the second lens assembly 1222b.

The first adjustment member DT1 of the first lens assembly 1222a and the first adjustment member DT1' of the second lens assembly 1222b may extend in opposite directions. Both the first adjustment member DT1 of the first lens assembly 1222a and the first adjustment member DT1' of the second lens assembly 1222b may extend in the optical-axis direction. In the embodiment, the first adjustment member DT1 of the first lens assembly 1222a may extend from the bottom surface of the accommodation part LAH toward the first camera actuator or the 2-1 housing. Alternatively, the first adjustment member DT1' of the second lens assembly 1222b may extend from the bottom surface of the accommodation part LAH' toward the image sensor or the base. Additionally, a separation distance between the bottom surface of the accommodation part of the first lens assembly 1222a and the bottom surface of the accommodation part of the second lens assembly 1222b may be smaller than a distance between the first adjustment member DT1 of the first lens assembly 1222a and the first adjustment member DT1' of the second lens assembly 1222b. Conversely, a distance between the first adjustment member DT1 of the first lens assembly 1222a and the first adjustment member DT1' of the second lens assembly 1222b may be greater than a distance between the bottom surface of the accommodation part of the first lens assembly 1222a and the bottom surface of the accommodation part of the second lens assembly 1222b.

For example, the first adjustment member DT1 of the first lens assembly 1222a may be located adjacent to the lens protrusion part LP of the first lens assembly 1222a. Additionally, the first adjustment member DT1 of the first lens assembly 1222a may be located closer to the guiding part GP' than the lens protrusion part LP' of the second lens assembly 1222b.

The first adjustment member DT1' of the second lens assembly 1222b may be located adjacent to the lens protrusion part LP of the second lens assembly 1222b. Additionally, the first adjustment member DT1' of the second lens assembly 1222b may be located closer to the guiding part GP than the lens protrusion part LP of the first lens assembly 1222a.

Additionally, the first adjustment member DT1 of the first lens assembly 1222a may be located adjacent to one side portion of the housing. The first adjustment member DT1' of the second lens assembly 1222b may be located adjacent to the other side portion of the housing. For example, the first adjustment member DT1 of the first lens assembly 1222a may be located adjacent to the second side portion of the housing. The first adjustment member DT1' of the second lens assembly 1222b may be located adj acent to the first side portion of the housing.

The guiding part GP of the first lens assembly 1222a may be located adjacent to the first side portion. The guiding part GP' of the second lens assembly 1222b may be located adjacent to the second side portion.

Additionally, the first adjustment member DT1 of the first lens assembly 1222a may be located on the side portion opposite to the side portion at which the ball part in contact with or connected to the first lens assembly 1222a is disposed. The first adjustment member DT1' of the second lens assembly 1222b may be located on the side portion opposite to the side portion at which the ball part in contact with or connected to the second lens assembly 1222b is disposed.

For example, the first adjustment member DT1 of the first lens assembly 1222a may be located closer to the second ball than the first ball. The first adjustment member DT1' of the second lens assembly 1222b may be located closer to the first ball than the second ball.

Additionally, the first adjustment member DT1 of the first lens assembly 1222a may be located on the side portion opposite to the first driving part. The first adjustment member DT1' of the second lens assembly 1222b may be located on the side portion opposite to the second driving part.

For example, the first adjustment member DT1 of the first lens assembly 1222a may be located closer to the first driving part than the second driving part. The first adjustment member DT1' of the second lens assembly 1222b may be located closer to the second driving part than the first driving part.

In this way, each of the first adjustment member DT1 of the first lens assembly 1222a and the first adjustment member DT1' of the second lens assembly 1222b may be located closer to the lens protrusion than the guiding member in each of the lens assemblies. With such a configuration, compensation may be made for optical errors that occur due to each of the lens assemblies having an asymmetrical structure. That is, the camera actuator according to the embodiment may perform optical compensation according to the asymmetrical structure. That is, the camera actuator according to the embodiment may perform optical compensation according to the asymmetric structure.

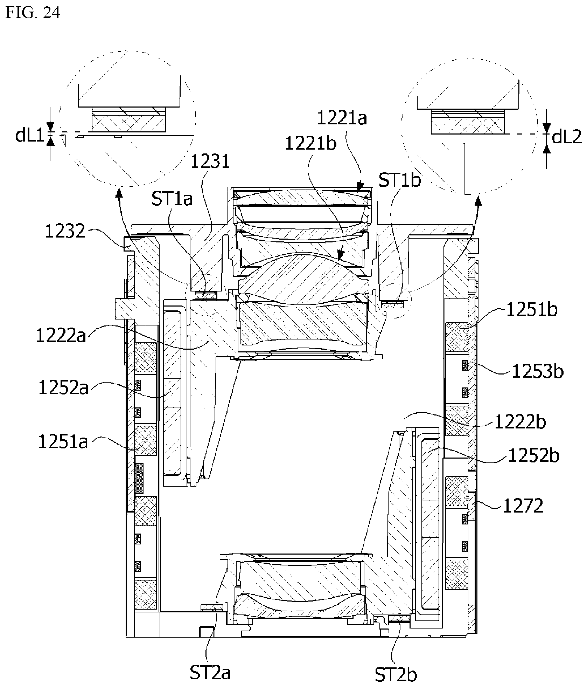

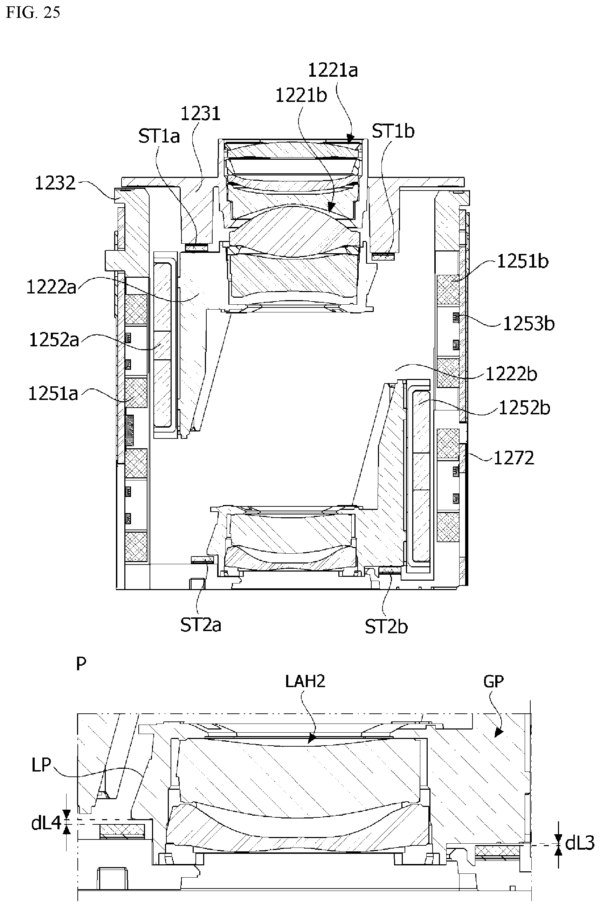

FIG. 24 is a cross-sectional view of the second camera actuator according to the embodiment, and FIG. 25 is an enlarged view of portion P in FIG. 22.

Referring to FIGS. 24 and 25, in the second camera actuator, the first yoke YK1 may be located adjacent to the first coil 1251a. The second yoke YK2 may be located adjacent to the second coil 1251b. Additionally, the first yoke YK1 may be located adjacent to the first magnet 1252a. The second yoke YK2 may be located adjacent to the second magnet 1252b.

Furthermore, the first and second magnets 1252a may include a first pole region (an N pole or S pole), a second pole region (an S pole or N pole) and neutral regions NA1 and NA2. The neutral regions NA1 and NA2 may be disposed between the first pole region and the second pole region. Additionally, in the first magnet 1252a, the first pole region, the neutral region, and the second pole region may be sequentially disposed in the optical-axis direction. Similarly, in the second magnet 1252b, the first pole region, the neutral region, and the second pole region may be sequentially disposed in the optical-axis direction. Additionally, in the first magnet 1252a and the second magnet 1252b, the first pole region may be the N pole. In the first magnet 1252a and the second magnet 1252b, the second pole region may be the S pole. The opposite thereof is also possible.

In the embodiment, the first lens assembly 1222a may provide a minimum magnification when it is adjacent to the image sensor or moved to the maximum in the third direction (the Z-axis direction). The first lens assembly 1222a may provide a maximum magnification when it is moved to the maximum toward the first camera actuator or in a direction opposite to the third direction. At this minimum or maximum magnification, the second lens assembly may be present at various positions for auto-focusing.

First, the second camera actuator may further include first stoppers ST1a and ST1b located at one end or a front end within the second housing (or the 2-2 housing 1232) and second stoppers ST2a and ST2b located at the other end thereof.

The first stoppers may include a 1-1 stopper ST1a disposed on one side and a 1-2 stopper ST1b disposed on the other side. The second stoppers may include a 2-1 stopper ST2a disposed on one side and a 2-2 stopper ST2b disposed on the other side. The one side and the other side may mean one side and its opposite side in the second direction. The 1-1 stopper ST1a may overlap the 2-1 stopper ST2a in the optical-axis direction. The 1-2 stopper ST1b may overlap the 2-2 stopper ST2b in the optical-axis direction.

According to the driving of the first lens assembly, the first lens assembly 1222a may be located as close as possible to the first stoppers ST1a and ST1b. At this time, a distance dL1 between the guiding part GP and the 1-1 stopper ST1a in the first lens assembly 1222a may be smaller than a distance dL2 between the 1-2 stopper ST1b and the lens protrusion part LP of the first lens assembly. That is, even when the first lens assembly 1222a moves to the maximum toward the first camera actuator side, the first lens assembly 1222a may first collide with the 1-1 stopper ST1a and then may collide with the 1-2 stopper ST1b. Thus, even when a lens made of glass is disposed within the first lens assembly 1222a (for example, at the front end), collision may be minimized during the maximum movement (at the mecha position) of the first lens assembly 1222a. That is, the phenomenon of lens breakage may be suppressed. Furthermore, since shock absorption primarily occurs in the guiding part which has a large volume, damage to the first lens assembly may also be minimized.

Similarly, a distance dL3 between the 2-2 stopper ST2b and the guiding part GP of the second lens assembly 1222b may be smaller than a distance dL4 between the 2-1 stopper ST2a and the lens protrusion part LP of the second lens assembly 1222b.

That is, even when the second lens assembly 1222b moves to the maximum toward the image sensor or in the optical-axis direction, the second lens assembly 1222b may first collide with the 2-2 stopper ST2b and then may collide with the 2-1 stopper ST2a. Thus, even when a lens made of glass is disposed within the second lens assembly 1222b, collision may be minimized during the maximum movement (at the mecha position) of the first lens assembly 1222a. That is, the phenomenon of lens breakage may be suppressed. Furthermore, since shock absorption primarily occurs in the guiding part which has a large volume, damage to the second lens assembly may also be minimized.

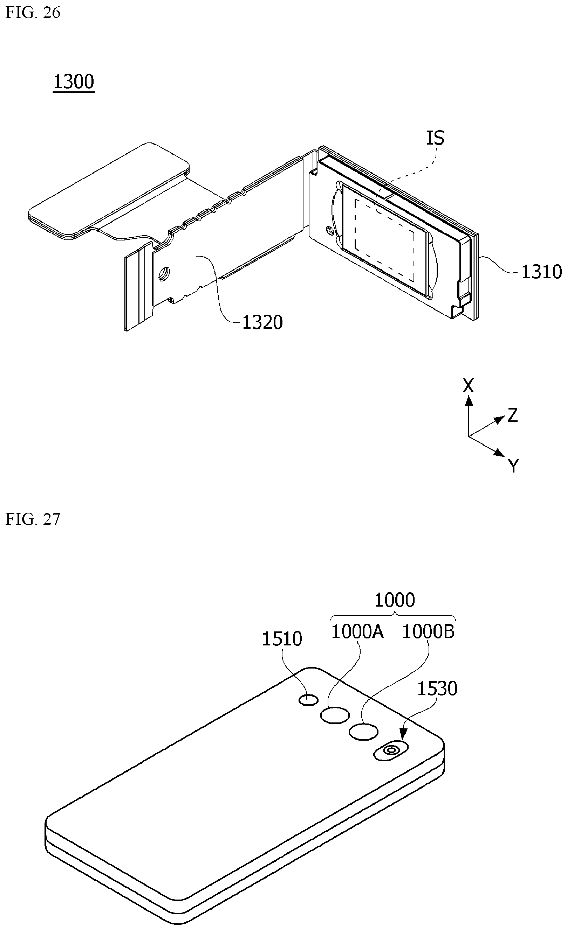

FIG. 26 is a schematic diagram illustrating a circuit board according to the embodiment.

Referring to FIG. 26, the circuit board 1300 according to the embodiment described above may include a first circuit board part 1310 and a second circuit board part 1320. The first circuit board part 1310 is located below the base and may be coupled to the base. Additionally, the image sensor IS may be disposed on the first circuit board part 1310. The first circuit board part 1310 and the image sensor IS may be electrically connected. That is, the base may be located at the rear end of the second camera actuator, and the image sensor and the circuit board (the first circuit board part) may be located at the rear end of the base. The base may include a filter (for example, for infrared light or the like). The circuit board 1300 may include the above-described image sensor and a sensor base.

Additionally, the second circuit board part 1320 may be located on a side portion of the base. In particular, the second circuit board part 1320 may be located on a first side portion of the base. Thus, the second circuit board part 1320 may be located adjacent to the first coil located adjacent to the first side portion, and thus electrical connection may be easily made. In addition, the second circuit board part 1320 may be located on a second side portion. In this way, a plurality of second circuit board parts 1320 may be provided. However, the present invention is not limited thereto, and the second circuit board part may be disposed on only one of the first side portion and the second side portion.

In addition, the circuit board 1300 may additionally include a fixed board (not shown) located on a side surface. Thus, even when the circuit board 1300 is made of a flexible material, it may be combined with the base while maintaining rigidity by the fixed board.

The second circuit board part 1320 of the circuit board 1300 may be located on a side portion of the driving part 1250. The circuit board 1300 may be electrically connected to the first driving part and the driving part. For example, electrical connection may be made using SMT, but are is limited to this method.

The circuit board 1300 may include a circuit board having electrically connectable wiring patterns, such as a rigid PCB, a flexible PCB, and a rigid flexible PCB. However, the circuit board 1300 is not limited to these types of circuit boards.

Additionally, the circuit board 1300 may be electrically connected to another camera module within a terminal or a processor of the terminal. Thus, the above-described camera actuator and the camera module including the same may transmit and receive various signals within the terminal.

FIG. 27 is a perspective view of a mobile terminal to which the camera module according to the embodiment is applied.

As illustrated in FIG. 27, a mobile terminal 1500 of the embodiment may include a camera module 1000, a flash module 1530, and an auto-focus device 1510 provided on a rear surface thereof.

The camera module 1000 may include an image capturing function and an auto-focus function. For example, the camera module 1000 may include an auto-focus function using images.

The camera module 1000 processes still or moving image frames obtained by an image sensor in an imaging mode or a video call mode.

The processed image frames may be displayed on a predetermined display part and may be stored in a memory. A camera (not shown) may also be disposed on a front surface of a mobile terminal body.

For example, the camera module 1000 may include a first camera module 1000A and a second camera module 1000B, and OIS may be implemented together with AF or zoom functions by the first camera module 1000A.

The flash module 1530 may include a light emitting element that emits light therein. The flash module 1530 may be operated by camera operation of the mobile terminal or by a user's control.

The auto-focus device 1510 may include one of packages of surface-emitting laser devices as a light emitting part.

The auto-focus device 1510 may include an auto-focus function using a laser. The auto-focus device 1510 may be mainly used in conditions in which the auto-focus function using the images of the camera module 1000 is degraded, such as at a close range of 10 m or less or in a dark environment.

The auto-focus device 1510 may include a light emitting part including a vertical cavity surface emitting laser (VCSEL) semiconductor device and a light receiving part that converts light energy into electrical energy such as a photodiode.

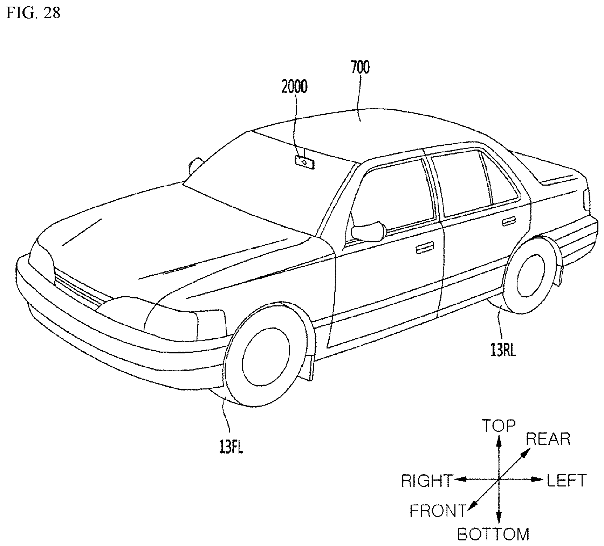

FIG. 28 is a perspective view of a vehicle to which the camera module according to the embodiment is applied.

For example, FIG. 28 is an exterior view of a vehicle equipped with a vehicle driving assistance device to which the camera module 1000 according to the embodiment is applied.

Referring to FIG. 28, a vehicle 700 of the embodiment may be equipped with wheels 13FL and 13FR that rotate by a power source, and a predetermined sensor. The sensor may be a camera sensor 2000, but is not limited thereto.

The camera sensor 2000 may be a camera sensor to which the camera module 1000 according to the embodiment is applied. The vehicle 700 of the embodiment may obtain image information through the camera sensor 2000 that captures front images or surrounding images and may use the image information to determine a lane non-identification situation and to create a virtual lane when the lane is not identified.

For example, the camera sensor 2000 may capture front images of the vehicle 700, and the processor (not shown) may analyze objects included in the front images to obtain image information.

For example, when objects such as lanes, adjacent vehicles, traffic obstructions, and indirect road markings like a center divider, curbs, and street trees, are captured in images captured by the camera sensor 2000, the processor may detect these objects and may include the objects in the image information. At this time, the processor may obtain distance information from the objects detected through the camera sensor 2000 to further supplement the image information.

The image information may be information on objects captured in the images. The camera sensor 2000 may include an image sensor and an image processing module.

The camera sensor 2000 may process still images or moving images obtained by an image sensor (for example, CMOS or CCD).

The image processing module may process still images or moving images acquired through an image sensor, may extract necessary information, and may transmit the extracted information to the processor.

At this time, the camera sensor 2000 may include a stereo camera to improve the measurement accuracy of the objects and to ensure more information such as distances between the vehicle 700 and the objects, but is not limited thereto.

Although the above matters have been described with reference to embodiments, these embodiments are merely examples and do not limit the present invention. Those skilled in the art will appreciate that various modifications and applications not exemplified above are made possible without departing from the essential characteristics of the present invention. For example, each component specifically shown in the embodiments may be modified and implemented. The differences related to such modifications and applications should be interpreted as being included in the scope of the present invention as defined in the appended claims.

**Claims**

1. A camera actuator comprising:

    a housing;
    a first lens assembly configured to move in an optical-axis direction with respect to the housing;
    a ball part located in the first lens assembly; and
    a driving part configured to move the first lens assembly,
    wherein the first lens assembly includes an accommodation part having a lens hole in which a plurality of lenses are accommodated, and a guiding part configured to come into contact with the accommodation part and in which the ball part is disposed, and
    an axis of the lens hole is disposed to be misaligned with an outer surface of the guiding part adjacent to the ball part.

2. The camera actuator of claim 1, wherein an upper surface of the accommodation part is non-perpendicular to the outer surface of the guiding part adjacent to the ball part.

3. The camera actuator of claim 1, wherein an upper surface of the accommodation part and the outer surface of the guiding part adjacent to the ball part form a first angle.

4. The camera actuator of claim 3, comprising a lens group disposed in the lens hole of the first lens assembly.

5. The camera actuator of claim 4, wherein the upper surface of the accommodation part and a plane perpendicular to an axis of the lens group form a second angle.

6. The camera actuator of claim 5, wherein the first angle and the second angle have the same size.

7. The camera actuator of claim 4, wherein an axis of the lens group is parallel to the optical-axis direction.

8. The camera actuator of claim 4, wherein the upper surface of the accommodation part includes a first end portion located on one side and a second end portion located on the other side in a direction perpendicular to the optical-axis direction, and
    the upper surface of the lens group includes a third end portion located on one side and a fourth end portion located on the other side in the direction perpendicular to the optical-axis direction.

9. The camera actuator of claim 8, wherein a separation distance between the first end portion and the second end portion in the optical-axis direction is greater than a separation distance between the third end portion and the fourth end portion in the optical-axis direction.

10. The camera actuator of claim 8, wherein the first end portion is located at a front end of the second end portion, and

the third end portion overlaps the fourth end portion in the direction perpendicular to the optical-axis direction.

FIG. 1

<u>1000</u>

FIG. 2

FIG. 3

FIG. 4

1200

X
Z
Y

FIG. 5

1251: 1251a, 1251b
1221: 1221a, 1221b, 1221c, 1221d
1222: 1222a, 1222b
1253: 1253a, 1253b
ST1: ST1a, ST1b, ST1c
ST2: ST2a, ST2b

FIG. 6

FIG. 7

FIG. 8

FIG. 9

FIG. 10

FIG. 11

FIG. 12

FIG. 13

FIG. 14

FIG. 15

FIG. 16a

FIG. 16b

FIG. 16c

FIG. 17a

FIG. 17b

3000

3100

1222

200

3300

FIG. 17c

FIG. 17d

FIG. 17e

(b)

(a)

FIG. 17f

3000

1222a

z=0

FIG. 17g

3000

1222a

y=0

FIG. 17h

x=0

3000

1222a

z
θx → y

FIG. 17i

FIG. 18

FIG. 19

FIG. 20

FIG. 21

FIG. 22

FIG. 23

FIG. 24

FIG. 25

FIG. 26

<u>1300</u>

IS

1310

1320

X

Z

Y

FIG. 27

1000

1000A   1000B

1510

1530

FIG. 28

## INTERNATIONAL SEARCH REPORT

| International application No. |
|---|
| **PCT/KR2023/013123** |

**A. CLASSIFICATION OF SUBJECT MATTER**

**G03B 17/12**(2006.01)i; **G03B 5/04**(2006.01)i; **H04N 23/55**(2023.01)i; **H04N 17/00**(2006.01)i; **G03B 43/00**(2006.01)i; **G03B 5/00**(2006.01)i

According to International Patent Classification (IPC) or to both national classification and IPC

**B. FIELDS SEARCHED**

Minimum documentation searched (classification system followed by classification symbols)

G03B 17/12(2006.01); G02B 7/02(2006.01); G02B 7/36(2006.01); G03B 13/36(2006.01); G03B 17/02(2006.01); G03B 5/00(2006.01); G03B 5/02(2006.01); G03B 5/04(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라 액추에이터(camera actuator), 렌즈 홀더(lens holder), 가이딩부(guiding part), 볼부(ball part), 틸팅 보정(tilting correction)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0051620 A (LG INNOTEK CO., LTD.) 26 April 2022 (2022-04-26) See paragraphs [0054], [0130], [0141]-[0143], [0173], [0187], [0193]-[0197], [0211] and [0225]; claim 1; and figure 13. | 1-10 |
| Y | KR 10-2011-0110581 A (SAMSUNG TECHWIN CO., LTD.) 07 October 2011 (2011-10-07) See paragraphs [0006], [0014], [0025]-[0026] and [0032]-[0038]; and figures 2-4. | 1-10 |
| A | JP 2011-081058 A (SHICOH ENGINEERING CO., LTD.) 21 April 2011 (2011-04-21) See entire document. | 1-10 |
| A | CN 114174916 A (ANIMAL TRANSPORT SCIENCE AND TECHNOLOGY LIMITED COMPANY) 11 March 2022 (2022-03-11) See entire document. | 1-10 |
| A | KR 10-2015-0050080 A (SAMSUNG ELECTRO-MECHANICS CO., LTD.) 08 May 2015 (2015-05-08) See entire document. | 1-10 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 December 2023** | **11 December 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/013123**

| Patent document cited in search report | | | Publication date (day/month/year) | Patent family member(s) | | | Publication date (day/month/year) |
|---|---|---|---|---|---|---|---|
| KR | 10-2022-0051620 | A | 26 April 2022 | CN | 116157733 | A | 23 May 2023 |
| | | | | EP | 4198625 | A1 | 21 June 2023 |
| | | | | JP | 2023-538862 | A | 12 September 2023 |
| | | | | KR | 10-2022-0020091 | A | 18 February 2022 |
| | | | | US | 2023-0269453 | A1 | 24 August 2023 |
| | | | | WO | 2022-035192 | A1 | 17 February 2022 |
| KR | 10-2011-0110581 | A | 07 October 2011 | None | | | |
| JP | 2011-081058 | A | 21 April 2011 | None | | | |
| CN | 114174916 | A | 11 March 2022 | JP | 2022-541856 | A | 27 September 2022 |
| | | | | JP | 7299409 | B2 | 27 June 2023 |
| | | | | KR | 10-2021-0075247 | A | 23 June 2021 |
| | | | | KR | 10-2313463 | B1 | 19 October 2021 |
| | | | | US | 11698572 | B2 | 11 July 2023 |
| | | | | US | 2022-0283480 | A1 | 08 September 2022 |
| | | | | WO | 2021-118204 | A1 | 17 June 2021 |
| KR | 10-2015-0050080 | A | 08 May 2015 | None | | | |

Form PCT/ISA/210 (patent family annex) (July 2022)